(19) Europäisches Patentamt
European Patent Office
Office européen des brevets

(11) **EP 4 625 835 A1**

(12) **EUROPEAN PATENT APPLICATION**
published in accordance with Art. 153(4) EPC

(43) Date of publication:
**01.10.2025 Bulletin 2025/40**

(21) Application number: **23910600.8**

(22) Date of filing: **26.12.2023**

(51) International Patent Classification (IPC):
***H04B 7/0456*** (2017.01)

(52) Cooperative Patent Classification (CPC):
**H04B 7/0456; H04B 7/06; H04W 72/0453;**
**H04W 72/566**

(86) International application number:
**PCT/CN2023/141939**

(87) International publication number:
**WO 2024/140677 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.12.2022 CN 202211712731**

(71) Applicant: **Huawei Technologies Co., Ltd.**
**Shenzhen, Guangdong 518129 (CN)**

(72) Inventors:
• **YE, Chencheng**
**Shenzhen, Guangdong 518129 (CN)**
• **GAO, Junhui**
**Shenzhen, Guangdong 518129 (CN)**
• **JIN, Huangping**
**Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(54) **CHANNEL INFORMATION REPORTING METHOD AND COMMUNICATION APPARATUS**

(57) This application discloses a channel information reporting method and a communication apparatus. In the method, a terminal device determines first information, where the first information indicates a precoding matrix, and the first information includes a plurality of coefficients $C_{l,i,f,d}$, where $l$ is a transport layer sequence number, $i$ is a CSI-RS port sequence number or a spatial domain basis sequence number, $f$ is a frequency domain basis sequence number, $d$ is a Doppler domain basis sequence number, the coefficient $C_{l,i,f,d}$ corresponds to a priority indication Pri($l, i, f, d$), and the coefficients $C_{l,i,f,d}$ in the first information are arranged based on Pri($l, i, f, d$). The terminal device sends the first information to a network device. In the solutions of this application, the terminal device reports CSI-RS port, frequency domain, and Doppler domain (time domain) related information to the network device based on the priority indication by using the first information, so that more important information can be preferentially reported, and the Doppler domain related information is data of a future channel predicted by the terminal device. Therefore, precoding accuracy of the network device is improved, and communication quality during movement of the terminal device is ensured.

FIG. 4

## Description

This application claims priority to Chinese Patent Application No. 202211712731.X, filed with the China National Intellectual Property Administration on December 29, 2022 and entitled "CHANNEL INFORMATION REPORTING METHOD AND COMMUNICATION APPARATUS", which is incorporated herein by reference in its entirety.

## TECHNICAL FIELD

This application relates to the field of communication technologies, and specifically, to a channel information reporting method and a communication apparatus.

## BACKGROUND

A multiple-input multiple-output (multiple input and multiple output, MIMO) technology is a core technology of a long term evolution (long term evolution, LTE) system and new radio (new radio, NR) of a 5th generation (5th generation, 5G) mobile communication system. A network device may determine, based on precoding matrix indicator (precoding matrix indicator, PMI) information sent by a terminal device, a precoding matrix used for sending downlink data. The PMI information is carried in uplink control information (uplink control information, UCI).

As specified in an existing protocol of the 3rd generation partnership project (3rd generation partnership project, 3GPP), the terminal device needs to report channel state information reference signal (channel state information reference signaling, CSI-RS) port and frequency domain related information in the precoding matrix to the network device by using a PMI. In a scenario in which the terminal device moves, a wireless channel changes with time, and a channel changes rapidly especially when the terminal device moves at a high speed; however, there is a delay in reporting the PMI. Consequently, the network device cannot obtain a valid PMI. This affects accuracy of precoding downlink data by the network device, and further affects communication quality. Further, when the terminal device reports the PMI to the network device, some information in the PMI may need to be omitted due to a limitation of a length of the UCI. Therefore, how the terminal device preferentially reports more important information in a valid PMI to the network device becomes a problem to be urgently resolved.

## SUMMARY

This application provides a channel information reporting method, to enable a terminal device to report CSI-RS port, frequency domain, and Doppler domain (time domain) related information to a network device based on a priority indication by using a PMI, so that more important information in the PMI can be preferentially sent, and the Doppler domain related information is data of a future channel predicted by the terminal device. Therefore, precoding accuracy of the network device is improved, and communication quality during movement of the terminal device is ensured. This application further provides a corresponding communication apparatus, communication system, computer-readable storage medium, computer program product, and the like.

A first aspect of this application provides a channel information reporting method, including: A terminal device determines first information, where the first information indicates a precoding matrix, and the first information includes a part or all of a plurality of coefficients $C_{l,i,f,d}$, where $l = 1, 2, ..., v$ is a transport layer sequence number, $i = 0, 1, ..., K - 1$ is a channel state information reference signal (channel state information reference signaling, CSI-RS) port sequence number or a spatial domain basis sequence number, $f = 0, 1, ..., M - 1$ is a frequency domain basis sequence number, $d = 0, 1, ..., Q - 1$ is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, where $v$, $K$, $M$, and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and each of the plurality of coefficients corresponds to a priority indication Pri($l, i, f, d$), and the coefficients $C_{l,i,f,d}$ in the first information are arranged based on Pri($l, i, f, d$); and the terminal device sends the first information to a network device.

In this application, the first information may be a precoding matrix indicator (precoding matrix indicator, PMI), the frequency domain basis may be a frequency domain two-dimensional discrete Fourier transform (discrete Fourier transform, DFT) vector, and the Doppler domain basis may also be referred to as a time domain basis, or may be a time domain DFT vector. A value range of $v$ may be {1,2,3,4}, a value range of $K$ may be {4, 8}, a value range $M$ of may be {4, 7}, and a value range of $Q$ may be {2, 3, 4}. Certainly, values of $v$, $K$, $M$, and $Q$ are merely examples herein. Value ranges of these parameters are not limited in this application.

In the first aspect, when reporting, to the network device, the first information indicating the precoding matrix, the terminal device reports CSI-RS port or spatial domain basis, and frequency domain related information, and further reports Doppler domain related information. In addition, the terminal device may send, based on the priority indication, the coefficient $C_{l,i,f,d}$ indicating the precoding matrix. In this way, information with a higher priority in the precoding matrix can be preferentially reported, and the Doppler domain related information is data of a future channel predicted by the terminal device. In this way, when precoding downlink data, the network device may perform precoding processing based on the channel predicted by the terminal device, so that precoding accuracy is improved, and communication quality during movement of the terminal device is further ensured.

In a possible implementation, a smaller value of Pri(*l, i, f, d*) indicates a higher priority of the coefficient $C_{l,i,f,d}$; or a larger value of Pri(*l, i, f, d*) indicates a higher priority of the coefficient $C_{l,i,f,d}$.

In a possible implementation, a higher priority of the coefficient $C_{l,i,f,d}$ indicates that the coefficient $C_{l,i,f,d}$ is ranked higher in a field corresponding to the first information. A lower priority of the coefficient $C_{l,i,f,d}$ indicates that the coefficient $C_{l,i,f,d}$ is preferentially omitted when a field length of the first information is insufficient.

In this possible implementation, priority indications corresponding to the coefficients may be different, and the priority indications may be represented in a value form, for example, 1, 2, .... In this application, a priority indication with a smaller value may indicate that a corresponding weighting coefficient is more important. In this way, when the first information is sent, a more important coefficient may be preferentially sent. Certainly, a priority indication with a larger value may indicate that a corresponding weighting coefficient is more important. In this way, when the first information is sent, a more important coefficient may be preferentially sent. It can be learned that a more important coefficient may be preferentially sent as much as possible by using the priority indication. This helps further ensure communication quality.

In a possible implementation, when a priority of a first coefficient $C_{l,i,f,d}$ is higher than a priority of a second coefficient $C_{l,i,f,d}$, the first coefficient $C_{l,i,f,d}$ is sorted before the second coefficient $C_{l,i,f,d}$ in an information field used to carry the first information.

In this possible implementation, the information field that carries a first field may be a field (field), an information element (information element), or the like in a message that carries the first field.

In a possible implementation, when a length of the information field is limited, the first information includes the first coefficient $C_{l,i,f,d}$ but does not include the second coefficient $C_{l,i,f,d}$.

In a possible implementation, the plurality of coefficients $C_{l,i,f,d}$ may be distributed in a first group and a second group, where a priority of the coefficient $C_{l,i,f,d}$ in the first group is higher than a priority of the coefficient $C_{l,i,f,d}$ in the second group, and the first information includes the coefficient $C_{l,i,f,d}$ in the first group.

In this possible implementation, the first group may include $A_1$ higher-priority coefficients $C_{l,i,f,d}$, and the second group may include $A_2$ lower-priority coefficients $C_{l,i,f,d}$. A sum of $A_1$ and $A_2$ may be equal to a total quantity of weighting coefficients, or may be less than the total quantity of weighting coefficients. When the terminal device has no sufficient grant resource to report all the weighting coefficients, the terminal device may preferentially omit the $A_2$ lower-priority coefficients $C_{l,i,f,d}$ in the second group, and preferentially report the $A_1$ higher-priority coefficients $C_{l,i,f,d}$. In this embodiment, a more important coefficient that needs to be reported is specified.

In a possible implementation, the first information further includes a first bitmap (bitmap), a length of the first bitmap is usually *vKMQ*, and the first bitmap may include a plurality of bits $B_{l,i,f,d}$. The terminal device may indicate, by using a value of the bit $B_{l,i,f,d}$ in the first bitmap, the coefficient $C_{l,i,f,d}$ included in the first information. The first information may include a coefficient $C_{l,i,f,d}$ corresponding to a bit $B_{l,i,f,d}$ with a first value. Usually, the coefficient $C_{l,i,f,d}$ corresponding to the bit $B_{l,i,f,d}$ with the first value is not a strongest coefficient.

In this application, $B_{l,i,f,d}$ represents a bit of the $l^{th}$ transport layer, the $i^{th}$ CSI-RS port or spatial domain basis, the $f^{th}$ frequency domain basis, and the $d^{th}$ Doppler domain basis in the first bitmap.

In this possible implementation, because all coefficients are obtained through normalization by using a strongest coefficient as a reference, in other words, the strongest coefficient is fixed at 1, the strongest coefficient can be learned of by the network device without being reported, and does not need to be reported. Therefore, the first information may not include a strongest coefficient corresponding to the bit $B_{l,i,f,d}$ with the first value. The value of the bit $K_{l,i,f,d}$ in the first bitmap may be the first value, or may be a second value. If $C_{l,i,f,d}$ indicated by the first value is not the strongest coefficient at the $l^{th}$ transport layer, $C_{l,i,f,d}$ is reported in the first information. $C_{l,i,f,d}$ indicated by the second value and the strongest coefficient at the $l^{th}$ transport layer that is indicated by the first value may be omitted and not reported. The first value may be 1, and the second value may be 0. Alternatively, the first value may be 0, and the second value may be 1. In this implementation, a more important coefficient that needs to be reported is specified.

In a possible implementation, a smaller value of Pri(*l, i, f, d*) indicates a higher priority of the bit $B_{l,i,f,d}$; or a larger value of Pri(*l, i, f, d*) indicates a higher priority of the bit $B_{l,i,f,d}$.

In a possible implementation, a higher priority of the bit $B_{l,i,f,d}$ indicates a higher position corresponding to the bit $B_{l,i,f,d}$ in the first bitmap, and a lower priority of the bit $B_{l,i,f,d}$ indicates a lower position corresponding to the bit $B_{l,i,f,d}$ in the first bitmap.

In the foregoing implementation, an important bit $B_{l,i,f,d}$ that needs to be reported may be specified by using the priority indication.

In a possible implementation, the plurality of bits $B_{l,i,f,d}$ in the first bitmap may be distributed in a third group and a fourth group, where a priority of the bit $B_{l,i,f,d}$ in the third group is higher than a priority of the bit $B_{l,i,f,d}$ in the fourth group.

In this possible implementation, the third group may be the first group, or may be another group independent of the first group, and the fourth group may be the second group, or may be another group independent of the second group. The third group may include $A_1$ highest-priority bits $B_{l,i,f,d}$, the fourth group may include $A_2$ lowest-priority bits $B_{l,i,f,d}$, the length of the first bitmap is $vKMQ$, and the third group may alternatively include $vKMQ\text{-}A_2$ highest-priority bits $B_{l,i,f,d}$. When all the bits $B_{l,i,f,d}$ cannot be reported due to a limitation of a length of UCI, the terminal device may preferentially omit the $A_2$ lowest-priority coefficients $B_{l,i,f,d}$ in the fourth group, and preferentially report the $vKMQ\text{-}A_2$ highest-priority coefficients $C_{l,i,f,d}$ in the third group. In this embodiment, a more important bit $B_{l,i,f,d}$ that needs to be reported is specified. In this manner, both the coefficients $C_{l,i,f,d}$ and the bits $B_{l,i,f,d}$ may be grouped by using the priority indication Pri($l$, $i$, $f$, $d$), to reduce reporting overheads as much as possible.

In a possible implementation, the $K$ CSI-RS ports are a part or all of CSI-RS ports selected by the terminal device from $P$ CSI-RS ports, where $P$ is a quantity of CSI-RS ports configured by the network device or predefined in a protocol, $K \le P$, and $K$ and $P$ are all positive integers.

In a possible implementation, the $K$ spatial domain bases are a part or all of spatial domain bases selected by the terminal device from $P$ spatial domain bases, where $P$ is a quantity of spatial domain bases configured by the network device or predefined in a protocol, $K \le P$, and $K$ and $P$ are all positive integers.

In a possible implementation, the network device sends assistance information to the terminal device, so that the terminal device determines $K$.

In a possible implementation, the $M$ frequency domain bases are a part or all of frequency domain bases selected by the terminal device from $N_3$ frequency domain bases, where $N_3$ is determined based on a quantity of frequency-domain units configured by the network device or predefined in a protocol, $M \le N_3$, and $M$ and $N_3$ are all positive integers.

In a possible implementation, the network device sends assistance information to the terminal device, so that the terminal device determines $M$.

In a possible implementation, the $Q$ Doppler domain bases are a part or all of Doppler domain bases selected by the terminal device from $N_4$ Doppler domain bases, where $N_4$ is determined based on a quantity of time-domain units configured by the network device or predefined in a protocol, $Q \le N_4$, and $Q$ and $N_4$ are all positive integers.

In a possible implementation, the network device sends assistance information to the terminal device, so that the terminal device determines $Q$.

In a possible implementation, a sequence number corresponding to the $M$ frequency domain bases selected by the terminal device from the $N_3$ frequency domain bases is represented by $n_{3,l}^{(f)}$, where $l = 1, 2, ..., v$ is the transport layer sequence number, and $f = 0, 1, ..., M - 1$; in other words, in the $M$ frequency domain bases at the $l$th transport layer, the frequency domain basis with the sequence number $f$ corresponds to the frequency domain basis with the sequence number $n_{3,l}^{(f)}$ in the $N_3$ frequency domain bases.

In a possible implementation, a sequence number corresponding to the $Q$ Doppler domain bases selected by the terminal device from the $N_4$ Doppler domain bases is represented by $n_{4,l}^{(d)}$, where $l = 1, 2, ..., v$ is the transport layer sequence number, and $d = 0, 1, ..., Q - 1$; in other words, in the $Q$ Doppler domain bases at the $l$th transport layer, the Doppler domain basis with the sequence number $d$ corresponds to the Doppler domain basis with the sequence number $n_{4,l}^{(d)}$ in the Doppler domain bases $N_4$.

In a possible implementation, at least one of the frequency domain basis sequence number and the Doppler domain basis sequence number may be a remapped sequence number.

In a possible implementation, the frequency domain basis sequence number $n_{3,l}^{(f)}$ is remapped by using $n_{3,l}^{(f)} = \left( n_{3,l}^{(f)} - n_{3,l}^{(f_l^*)} \right) \bmod N_3$, so that a remapped frequency domain basis sequence number corresponding to the strongest coefficient is $n_{3,l}^{(f_l^*)} = 0$, where $n_{3,l}^{(f)}$ represents a sequence number of the $N_3$ frequency domain bases, and $n_{3,l}^{(f_l^*)}$ represents the remapped frequency domain basis sequence number corresponding to the strongest coefficient in the $N_3$ frequency domain bases.

In a possible implementation, $f$ is remapped by using $f = \left( f - f_l^* \right) \bmod M$, so that a remapped frequency domain basis sequence number corresponding to the strongest coefficient is $f_l^* = 0$, where $f$ represents a sequence number of the $M$ frequency domain bases selected from the $N_3$ frequency domain bases, and $f_l^*$ represents the remapped frequency domain basis sequence number corresponding to the strongest coefficient in the *M* frequency domain bases.

In a possible implementation, the Doppler domain basis sequence number $n_{4,l}^{(d)}$ is remapped by using

$$n_{4,l}^{(d)} = \left( n_{4,l}^{(d)} - n_{4,l}^{(d_l^*)} \right) \mod N_4,$$ and $n_{4,l}^{(d_l^*)} = 0$ after the remapping, where $n_{4,l}^{(d)}$ represents a sequence number of

the $N_4$ Doppler domain bases, and $n_{4,l}^{(d_l^*)}$ represents a remapped Doppler domain basis sequence number corresponding to the strongest coefficient in the $N_4$ Doppler domain bases.

In a possible implementation, *d* is remapped by using $d = (d - d_l^*) \mod Q$, so that a remapped Doppler domain basis sequence number corresponding to the strongest coefficient is $d_l^* = 0,$, where *d* represents a sequence number of the *Q* frequency domain bases selected from the $N_4$ Doppler domain bases, and $d_l^*$ represents the remapped Doppler domain basis sequence number corresponding to the strongest coefficient in the Q Doppler domain bases.

It should be noted that, for *l* = 1, ... , *v*, it is assumed that $i_l^* \in \{0, 1, ..., K-1\}$, $f_l^* \in \{0, 1, ..., M-1\}$, and $d_l^* \in \{0, 1, ..., Q-1\}$ are respectively a CSI-RS port sequence number, a frequency domain basis sequence number, and a Doppler domain basis sequence number that correspond to the strongest coefficient at the *l*th transport layer, in other words, $C_{l,i_l^*,f_l^*,d_l^*}$ is the strongest coefficient at the *l*th transport layer.

In a possible implementation, the terminal device may indicate, to the network device, the CSI-RS port sequence number corresponding to the strongest coefficient at the *l*th transport layer.

It should be noted that a remapped frequency domain basis is a frequency domain basis obtained by offsetting one frequency domain DFT vector, and a remapped Doppler domain basis is a Doppler domain basis obtained by offsetting one time domain DFT vector. The frequency domain remapping and the Doppler domain remapping are predefined in a protocol, so that the frequency domain basis sequence number and the Doppler domain basis sequence number that correspond to the strongest coefficient can be 0, without affecting a precoding effect. In this way, the terminal device does not need to report the frequency domain basis sequence number and the Doppler domain basis sequence number for the strongest coefficient, so that reporting overheads can be reduced.

In a possible implementation, Pri(*l, i, f, d*) is obtained by using a first relation, and the first relation is:

$$\text{Pri}(l, i, f, d) = KvD\pi(f) + Kv\varphi(d) + vi + l,$$

where $\varphi(d)$ indicates that d is remapped, $\pi(f)$ indicates that *f* is remapped, *D* is a positive integer, and *D* > $\varphi(d)$. A value of *D* may be $N_4$, and a value range of $\varphi(d)$ may be 0, 1, ..., $N_4$ -1.

In this application, that *d* is remapped may be represented in two manners. One representation manner is $\varphi(d)$, indicating that Doppler domain basis sequence numbers of all transport layers may be of a same value, and the other representation manner is $\varphi_l(d)$, indicating that Doppler domain basis sequence numbers of different transport layers may be of different values. Similarly, that *f* is remapped may also be represented in two manners. One representation manner is $\pi(f)$, indicating that frequency domain basis sequence numbers of all the transport layers may be of a same value, and the other manner is $\pi_l(f)$, indicating that frequency domain basis sequence numbers of the different transport layers may be of different values.

In this possible implementation, values of coefficients 1, *v, Kv,* and *KvD* before four parameters *l, i,* $\varphi(d)$, and $\pi(f)$ from right to left on a right side of the equal sign in the first relation are in ascending order. This may indicate that influence of the four parameters *l, i,* $\varphi(d)$, and $\pi(f)$ on a value of the priority indication is in ascending order. A relationship between *d* and *f* and importance of the coefficient in the first information may be determined in advance through predefined remapping. Therefore, *d* and *f* have large influence on the priority indication, so that an important coefficient is reported preferentially. In the first relation, *d* is remapped in Doppler domain, so that a Doppler domain basis sequence number corresponding to the strongest coefficient may be 0, and *f* is remapped in frequency domain, so that a frequency domain basis sequence number corresponding to the strongest coefficient may be 0. In the first relation, the coefficient *Kv* of $\varphi(d)$ is less than the coefficient *KvD* of $\pi$(f), indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

In a possible implementation, Pri(*l, i, f, d*) is obtained by using a second relation, and the second relation is:

$$\text{Pri}(l, i, f, d) = KvF\varphi(d) + Kv\pi(f) + vi + l,$$

where $\pi(f)$ indicates that $f$ is remapped, $\varphi(d)$ indicates that $d$ is remapped, $F$ is a positive integer, and $F > \pi(f)$. A value of $F$ may be $N_3$, and a value range of $\pi(f)$ may be 0, 1, ..., $N_3$-1.

In this possible implementation, values of coefficients 1, $v$, $Kv$, and $KvF$ before four parameters $l$, $i$, $\pi(f)$, and $\varphi(d)$ from right to left on a right side of the equal sign in the second relation are in ascending order. This may indicate that influence of the four parameters $l$, $i$, $\pi(f)$, and $\varphi(d)$ on a value of the priority indication is in ascending order. A relationship between $d$ and $f$ and importance of the coefficient in the first information may be determined in advance through predefined remapping. Therefore, $d$ and $f$ have large influence on the priority indication, so that an important coefficient is reported preferentially. In the second relation, $d$ is remapped in Doppler domain, so that a Doppler domain basis sequence number corresponding to the strongest coefficient may be 0, and $f$ is remapped in frequency domain, so that a frequency domain basis sequence number corresponding to the strongest coefficient may be 0. In the second relation, the coefficient $Kv$ of $\pi(f)$ is less than the coefficient $KvF$ of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, Pri($l$, $i$, $f$, $d$) is obtained by using a third relation, and the third relation is:

$$\text{Pri}(l, i, f, d) = Kv\phi(f, d) + vi + l,$$

where $\phi(f, d)$ indicates that both $f$ and d are remapped.

In this application, that $f$ and $d$ are remapped may be represented in two manners. One manner is $\phi(f, d)$, indicating that frequency domain basis sequence numbers and Doppler domain basis sequence numbers of all the transport layers may be of a same value, and the other representation manner is $\phi_l(f, d)$, indicating that frequency domain basis sequence numbers and Doppler domain basis sequence numbers of different transport layers may be of different values. A value range of $\phi(f, d)$ may be 0, 1, ..., $D*M$-1.

In this possible implementation, values of coefficients 1, $v$, and $Kv$ before three parameters $l$, $i$, and $\phi(f, d)$ from right to left on a right side of the equal sign in the third relation are in ascending order. This may indicate that impact of the three parameters $l$, $i$, and $\phi(f, d)$ on the value of the priority indication is in ascending order. A relationship between $d$ and $f$ and importance of the coefficient in the first information may be determined in advance through predefined remapping. Therefore, d and $f$ have large impact on the priority indication, so that an important coefficient is reported preferentially. In the third relation, $d$ is remapped in Doppler domain, so that a Doppler domain basis sequence number corresponding to the strongest coefficient may be 0, and $f$ is remapped in frequency domain, so that a frequency domain basis sequence number corresponding to the strongest coefficient may be 0. The third relation indicates that when both the Doppler domain basis and the frequency domain basis are used for determining Pri($l$, $i$, $f$, $d$), coefficients $C_{l,i,f,d}$ of the Doppler domain basis whose sequence number is 0 and the frequency domain basis whose sequence number is 0 and coefficients $C_{l,i,f,d}$ of a Doppler domain basis and a frequency domain basis whose sum of distances to the Doppler domain basis whose sequence number is 0 and the frequency domain basis whose sequence number is 0 is smaller are more important, and are preferentially reported.

In a possible implementation, a smaller value of $\left( \min(n_{3,l}^{(f)}, N_3 - n_{3,l}^{(f)}) + \min(n_{4,l}^{(d)}, N_4 - n_{4,l}^{(d)}) \right)$ indicates a smaller value of $\phi(f, d)$, where n4, (d) represents, for the $l$th layer, a sequence number corresponding to the $Q$ selected Doppler domain bases in $N_4$ Doppler domain bases, $N_4$ is determined based on a quantity of time-domain units configured by the network device, Q $\le N_4$, and $N_4$ is a positive integer; and $n_{3,l}^{(f)}$ represents, for the $l$th layer, a sequence number corresponding to the $M$ selected frequency domain bases in $N_3$ frequency domain bases, $N_3$ is determined based on a quantity of frequency-domain units configured by the network device, $M \le N_3$, and $N_3$ is a positive integer.

In this possible implementation, $n_{3,l}^{(f)}$ may alternatively represent a position of a delay sampling point corresponding to the $f$th frequency domain basis at the $l$th layer of the precoding matrix, and $N_3$ represents a total quantity of delay sampling points; or $n_{4,l}^{(d)}$ may represent a position of a Doppler frequency sampling point corresponding to the $d$th Doppler domain basis at the $l$th layer of the precoding matrix, and $N_4$ represents a total quantity of Doppler frequency sampling points, and $(\min(n_{3,l}^{(f)}, N_3 - n_{3,l}^{(f)}) + \min(n_{4,l}^{(d)}, N_4 - n_{4,l}^{(d)}))$ represents a sum of a first distance and a second distance, where the first distance is a distance between the position of the delay sampling point corresponding to the $f$th frequency domain basis and a position of a 0 delay sampling point, and the second distance is a distance between the position of the Doppler frequency sampling point corresponding to the $d$th Doppler domain basis and a position of a 0 Doppler frequency sampling point. For $\min(n_{3,l}^{(f)}, N_3 - n_{3,l}^{(f)})$ and $\min(n_{4,l}^{(d)}, N_4 - n_{4,l}^{(d)})$, refer to the foregoing descriptions for understanding. Therefore, a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi(f, d)$, so that a more important coefficient can be reported preferentially.

In a possible implementation, the value range of $\phi(f, d)$ is 0, 1, ..., and $D*M$-1.

In this possible implementation, there are $D*M$ possible values for $\phi(f, d)$, in other words, there is one value for each of $D*M$ combinations of Doppler domain bases and frequency domain bases, indicating that the value of the variable $\phi$ (f, d) is directly related to Doppler sampling points and delay sampling points corresponding to the $D*M$ Doppler domain bases and frequency domain bases.

In a possible implementation, Pri(l, i, f, d) is obtained by using a fourth relation, and the fourth relation is:

$$\mathrm{Pri}(l, i, f, d) = KvM\varphi(d) + Kvf + vi + l,$$

where $\varphi(d)$ indicates that $d$ is remapped.

In this possible implementation, for meanings in the fourth relation, basically refer to the descriptions in the first relation for understanding. A difference is that $f$ is not remapped in the fourth relation. In this way, during calculation of Pri(l, i, f, d), only $\pi(f)$ in the first relation needs to be replaced with $f$. For another specific process, refer to the foregoing descriptions of the first relation for understanding. Details are not described herein again. In the fourth relation, $d$ is remapped in Doppler domain, so that a Doppler domain basis sequence number corresponding to the strongest coefficient may be 0, and the coefficient $Kv$ of $f$ is less than the coefficient $KvM$ of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, a smaller value of $\min(n_{4,l}^{(d)}, N_4 - n_{4,l}^{(d)})$ indicates a smaller value of $\varphi(d)$, where $n_{4,l}^{(d)}$ represents, for the $l^{th}$ layer, a sequence number corresponding to the Q selected Doppler domain bases in $N_4$ Doppler domain bases, $N_4$ is determined based on a quantity of time-domain units configured by the network device, $Q \le N_4$, and $N_4$ is a positive integer.

In this possible implementation, $n_{4,l}^{(d)}$ may alternatively represent a position of a Doppler frequency sampling point corresponding to the $d^{th}$ Doppler domain basis at the $l^{th}$ layer of the precoding matrix, $N_4$ represents a total quantity of Doppler frequency sampling points, and $\min(n_{4,l}^{(d)}, N_4 - n_{4,l}^{(d)})$ represents a distance between the position of the Doppler frequency sampling point corresponding to the $d^{th}$ Doppler domain basis and a position of a 0 Doppler frequency sampling point. Because $d$ is usually a remapped Doppler domain basis sequence number, the Doppler domain basis sequence number corresponding to the strongest coefficient is $n_{4,l}^{(d_l^*)} = 0$, in other words, the strongest coefficient is at the 0 Doppler frequency sampling point. Because a coefficient closer to the strongest coefficient is more likely to have a greater amplitude, a coefficient whose Doppler frequency sampling point position is closer to the 0 Doppler frequency sampling point is more important. Therefore, a smaller value of $\min(n_{4,l}^{(d)}, N_4 - n_{4,l}^{(d)})$ indicates a smaller value of $\varphi(d)$, so that a more important coefficient can be reported preferentially.

In a possible implementation, a value of $D$ is $N_4$, and a value range of $\varphi(d)$ is 0, 1, ..., $N_4$ -1.

In this possible implementation, there are $N_4$ possible values for $\varphi(d)$, in other words, there is one value for each of the $N_4$ Doppler domain bases, indicating that the value of the variable $\varphi(d)$ is directly related to Doppler sampling points corresponding to the $N_4$ Doppler domain bases.

In a possible implementation, $\varphi(d) = \min(2 \cdot n_{4,l}^{(d)}, 2 \cdot (N_4 - n_{4,l}^{(d)}) - 1)$.

In a possible implementation, a smaller value of $\min(n_{3,l}^{(f)}, N_3 - n_{3,l}^{(f)})$ indicates a smaller value of $\pi(f)$, where $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, $M \le N_3$, and $N_3$ is a positive integer.

In this application, the frequency-domain unit may be a subband, or may be a resource block (resource block, RB).

In this possible implementation, $n_{3,l}^{(f)}$ may alternatively represent a position of a delay sampling point corresponding to the $f^{th}$ frequency domain basis at the $l^{th}$ layer of the precoding matrix, $N_3$ represents a total quantity of delay sampling points, and $\min(n_{3,l}^{(f)}, N_3 - n_{3,l}^{(f)})$ represents a distance between the position of the delay sampling point corresponding to the $f^{\text{th}}$ frequency domain basis and a position of a 0 delay sampling point. Because $f$ is usually a remapped frequency domain basis sequence number, the frequency domain basis sequence number corresponding to the strongest coefficient is $n_{3,l}^{(f_l^*)} = 0$, in other words, the strongest coefficient is at the 0 delay sampling point. Because a coefficient closer to the strongest coefficient is more likely to have a greater amplitude, a coefficient whose delay sampling point position is closer to the 0 Doppler frequency sampling point is more important. Therefore, a smaller value of $\min(n_{3,l}^{(f)}, N_3 - n_{3,l}^{(f)})$ indicates a smaller value of $\pi(f)$, so that a more important coefficient can be reported preferentially.

In a possible implementation, a value of $F$ is $N_3$, and a value range of $\pi(f)$ is 0, 1, ..., $N_3$-1.

In this possible implementation, there are $N_3$ possible values for $\pi(f)$, in other words, there is one value for each of the $N_3$ frequency domain bases, indicating that the value of the variable $\pi(f)$ is directly related to delay sampling points corresponding to the $N_3$ frequency domain bases.

In a possible implementation, $\pi(f) = \min(2 \cdot n_{3,l}^{(f)}, 2 \cdot (N_3 - n_{3,l}^{(f)}) - 1)$.

In a possible implementation, Pri($l$, $i$, $f$, $d$) is obtained by using a fifth relation, and the fifth relation is:

$$\mathrm{Pri}(l, i, f, d) = Kv \cdot Md + Kvf + vi + l.$$

For the fifth relation, refer to the descriptions in the first relation for understanding. A difference is that $d$ and $f$ are not remapped in the fifth relation. In this way, during calculation of Pri($l$, $i$, $f$, $d$), in the first relation, only $\pi(f)$ needs to be replaced with $f$ and $\varphi(d)$ needs to be replaced with $d$. For another specific process, refer to the foregoing descriptions of the first relation for understanding. In the fifth relation, the coefficient $Kv$ of $f$ is less than the coefficient $KvM$ of $d$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, Pri($l$, $i$, $f$, $d$) is obtained by using a sixth relation, and the sixth relation is:

$$\mathrm{Pri}(l, i, f, d) = KvD\pi(f) + Kvd + vi + l,$$

where $\pi(f)$ indicates that $f$ is remapped.

In this possible implementation, for the sixth relation, refer to the first relation for understanding. A difference is that $d$ is not remapped in the sixth relation. In this way, during calculation of Pri($l$, $i$, $f$, $d$), only $\varphi(d)$ in the first relation needs to be replaced with $d$. For another specific process, refer to the foregoing descriptions of the first relation for understanding. In the sixth relation, $f$ is remapped in frequency domain, so that a frequency domain basis sequence number corresponding to the strongest coefficient may be 0. In the sixth relation, the coefficient $Kv$ of $d$ is less than the coefficient $KvD$ of $\pi(f)$, indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

In a possible implementation, Pri($l$, $i$, $f$, $d$) is obtained by using a seventh relation, and the seventh relation is:

$$\mathrm{Pri}(l, i, f, d) = KvFd + Kv\pi(f) + vi + l,$$

where $\pi(f)$ indicates that $f$ is remapped.

In this possible implementation, for the seventh relation, refer to the second relation for understanding. A difference is that $d$ is not remapped in the seventh relation. In this way, during calculation of Pri($l$, $i$, $f$, $d$), only $\varphi(d)$ in the second relation needs to be replaced with d. For another specific process, refer to the foregoing descriptions of the second relation for understanding. In the seventh relation, $f$ is remapped in frequency domain, so that a frequency domain basis sequence number corresponding to the strongest coefficient may be 0. In the seventh relation, the coefficient $Kv$ of $\pi(f)$ is less than the coefficient $KvD$ of $d$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In the sixth relation and the seventh relation, when $\pi(f)$ is a variable, a smaller value of $\min(n_{3,l}^{(f)}, N_3 - n_{3,l}^{(f)})$ indicates a smaller value of $\pi(f)$. For $\min(n_{3,l}^{(f)}, N_3 - n_{3,l}^{(f)})$, refer to the foregoing corresponding descriptions for understanding.

A second aspect of this application provides a channel information reporting method, including: A network device receives first information, where the first information indicates a precoding matrix, and the first information includes a part or all of a plurality of coefficients $C_{l,i,f,d}$, where $l = 1, 2, \ldots, v$ is a transport layer sequence number, $i = 0, 1, \ldots, K - 1$ is a CSI-RS port sequence number or a spatial domain basis sequence number, $f = 0, 1, \ldots, M - 1$ is a frequency domain basis sequence number, $d = 0, 1, \ldots, Q - 1$ is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, where $v$, $K$, M, and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and each of the plurality of coefficients corresponds to a priority indication Pri($l$, $i$, $f$, $d$), and the coefficients $C_{l,i,f,d}$ in the first information are arranged based on Pri($l$, $i$, $f$, $d$); and the network device performs precoding processing on to-be-transmitted data based on the first information.

In the second aspect, the network device receives the first information from the terminal device, where the plurality of coefficients $C_{l,i,f,d}$ in the first information are coefficients that are preferentially reported and that are determined by the terminal device. In addition, the terminal device reports CSI-RS port or spatial domain basis and frequency domain related information, and further reports Doppler domain related information. The Doppler domain related information is data of a future channel predicted by the terminal device. In this way, when precoding downlink data, the network device may perform precoding processing based on the channel predicted by the terminal device, so that precoding accuracy is improved, and communication quality during movement of the terminal device is further ensured.

In a possible implementation, a smaller value of Pri($l$, $i$, $f$, $d$) indicates a higher priority of the coefficient $C_{l,i,f,d}$; or a larger value of Pri($l$, $i$, $f$, $d$) indicates a higher priority of the coefficient $C_{l,i,f,d}$.

In a possible implementation, a higher priority of the coefficient $C_{l,i,f,d}$ indicates that the coefficient $C_{l,i,f,d}$ is ranked higher in a field corresponding to the first information. A lower priority of the coefficient $C_{l,i,f,d}$ indicates that the coefficient $C_{l,i,f,d}$ is preferentially omitted when a field length of the first information is insufficient.

In this possible implementation, priority indications corresponding to the coefficients may be different, and the priority indications may be represented in a value form, for example, 1, 2, .... In this application, a priority indication with a smaller value may indicate that a corresponding weighting coefficient is more important. In this way, when the first information is sent, a more important coefficient may be preferentially sent. Certainly, a priority indication with a larger value may indicate that a corresponding weighting coefficient is more important. In this way, when the first information is sent, a more important coefficient may be preferentially sent. It can be learned that a more important coefficient may be preferentially sent as much as possible by using the priority indication. This helps further ensure communication quality.

In a possible implementation, when a priority of a first coefficient $C_{l,i,f,d}$ is higher than a priority of a second coefficient $C_{l,i,f,d}$, the first coefficient $C_{l,i,f,d}C_{l,i,fd}$ is sorted before the second coefficient $C_{l,i,f,d}$ in an information field used to carry the first information.

In a possible implementation, when a length of the information field is limited, the first information includes the first coefficient $C_{l,i,f,d}$ but does not include the second coefficient $C_{l,i,f,d}$.

In a possible implementation, the plurality of coefficients $C_{l,i,f,d}$ may be distributed in a first group and a second group, where a priority of the coefficient $C_{l,i,f,d}$ in the first group is higher than a priority of the coefficient $C_{l,i,f,d}$ in the second group, and the first information includes the coefficient $C_{l,i,f,d}$ in the first group.

In this possible implementation, the first group may include $A_1$ higher-priority coefficients $C_{l,i,f,d}$, and the second group may include $A_2$ lower-priority coefficients $C_{l,i,f,d}$. A sum of $A_1$ and $A_2$ may be equal to a total quantity of weighting coefficients, or may be less than the total quantity of weighting coefficients. When the terminal device has no sufficient grant resource to report all the weighting coefficients, the terminal device may preferentially omit the $A_2$ lower-priority coefficients $C_{l,i,f,d}$ in the second group, and preferentially report the $A_1$ higher-priority coefficients $C_{l,i,f,d}$. In this embodiment, a more important coefficient that needs to be reported is specified.

In a possible implementation, the first information further includes a first bitmap (bitmap), a length of the first bitmap is usually uKMQ, and the first bitmap may include a plurality of bits $B_{l,i,f,d}$. The terminal device may indicate, by using a value of the bit $B_{l,i,f,d}$ in the first bitmap, the coefficient $C_{l,i,f,d}$ included in the first information. The first information may include a coefficient $C_{l,i,f,d}$ corresponding to a bit $B_{l,i,f,d}$ with a first value. Usually, the coefficient $C_{l,i,f,d}$ corresponding to the bit $B_{l,i,f,d}$ with the first value is not a strongest coefficient.

In this possible implementation, because all coefficients are obtained through normalization by using a strongest coefficient as a reference, in other words, the strongest coefficient is fixed at 1, the strongest coefficient can be learned of by the network device without being reported, and does not need to be reported. Therefore, the first information may not include a strongest coefficient corresponding to the bit $B_{l,i,f,d}$ with the first value. The value of the bit $K_{l,i,f,d}$ in the first bitmap may be the first value, or may be a second value. If $C_{l,i,f,d}$ indicated by the first value is not the strongest coefficient at the $l^{th}$ transport layer, $C_{l,i,f,d}$ is reported in the first information. $C_{l,i,f,d}$ indicated by the second value and the strongest coefficient at the $l^{th}$ transport layer that is indicated by the first value may be omitted and not reported. The first value may be 1, and the second value may be 0. Alternatively, the first value may be 0, and the second value may be 1. In this implementation, a more important coefficient that needs to be reported is specified.

In a possible implementation, a smaller value of Pri($l$, $i$, $f$, $d$) indicates a higher priority of the bit $B_{l,i,f,d}$; or a larger value of Pri($l$, $i$, $f$, $d$) indicates a higher priority of the bit $B_{l,i,f,d}$.

In a possible implementation, a higher priority of the bit $B_{l,i,f,d}$ indicates a higher position corresponding to the bit $B_{l,i,f,d}$ in the first bitmap, and a lower priority of the bit $B_{l,i,f,d}$ indicates a lower position corresponding to the bit $B_{l,i,f,d}$ in the first bitmap.

In the foregoing implementation, an important bit $B_{l,i,f,d}$ that needs to be reported may be specified by using the priority indication.

In a possible implementation, the plurality of bits $B_{l,i,f,d}$ in the first bitmap may be distributed in a third group and a fourth group, where a priority of the bit $B_{l,i,f,d}$ in the third group is higher than a priority of the bit $B_{l,i,f,d}$ in the fourth group.

In this possible implementation, the third group may be the first group, or may be another group independent of the first group, and the fourth group may be the second group, or may be another group independent of the second group. The third group may include $A_1$ highest-priority bits $B_{l,i,f,d}$, the fourth group may include $A_2$ lowest-priority bits $B_{l,i,f,d}$, the length of the first bitmap is uKMQ, and the third group may alternatively include vKMQ-$A_2$ highest-priority bits $B_{l,i,f,d}$. When all the bits $B_{l,i,f,d}$ cannot be reported due to the limitation of the length of the UCI, the terminal device may preferentially omit the $A_2$ lowest-priority coefficients $B_{l,i,f,d}$ in the fourth group, and preferentially report the vKMQ-$A_2$ highest-priority coefficients $C_{l,i,f,d}$ in the third group. In this embodiment, a more important bit $B_{l,i,f,d}$ that needs to be reported is specified. In this manner, both the coefficients $C_{l,i,f,d}$ and the bits $B_{l,i,f,d}$ may be grouped by using the priority indication Pri($l$, $i$, $f$, $d$), to reduce reporting overheads as much as possible.

In a possible implementation, the K CSI-RS ports are a part or all of CSI-RS ports selected by the terminal device from P CSI-RS ports, where P is a quantity of CSI-RS ports configured by the network device or predefined in a protocol, K ≤ P, and K and P are all positive integers.

In a possible implementation, the K spatial domain bases are a part or all of spatial domain bases selected by the terminal device from P spatial domain bases, where P is a quantity of spatial domain bases configured by the network device or predefined in a protocol, K ≤ P, and K and P are all positive integers.

In a possible implementation, the network device sends assistance information to the terminal device, so that the terminal device determines K.

In a possible implementation, the M frequency domain bases are a part or all of frequency domain bases selected by the terminal device from $N_3$ frequency domain bases, where $N_3$ is determined based on a quantity of frequency-domain units configured by the network device or predefined in a protocol, M ≤ $N_3$, and M and $N_3$ are all positive integers.

In a possible implementation, the network device sends assistance information to the terminal device, so that the terminal device determines M.

In a possible implementation, the Q Doppler domain bases are a part or all of Doppler domain bases selected by the terminal device from $N_4$ Doppler domain bases, where $N_4$ is determined based on a quantity of time-domain units configured by the network device or predefined in a protocol, Q ≤ $N_4$, and Q and $N_4$ are all positive integers.

In a possible implementation, the network device sends assistance information to the terminal device, so that the terminal device determines Q.

In a possible implementation, a sequence number corresponding to the M frequency domain bases selected by the terminal device from the $N_3$ frequency domain bases is represented by $n_{3,l}^{(f)}$ where $l$ = 1, 2, ..., $v$ is the transport layer sequence number, and $f$ = 0,1, ..., M - 1; in other words, in the M frequency domain bases at the $l^{th}$ transport layer, the frequency domain basis with the sequence number $f$ corresponds to the frequency domain basis with the sequence number $n_{3,l}^{(f)}$ in the $N_3$ frequency domain bases.

In a possible implementation, a sequence number corresponding to the Q Doppler domain bases selected by the terminal device from the $N_4$ Doppler domain bases is represented by $n_{4,l}^{(d)}$ where $l$ = 1, 2, ..., $v$ is the transport layer sequence number, and $d$ = 0,1, ..., Q - 1; in other words, in the Q Doppler domain bases at the $l^{th}$ transport layer, the Doppler domain basis with the sequence number $d$ corresponds to the Doppler domain basis with the sequence number $n_{4,l}^{(d)}$ in the Doppler domain bases $N_4$.

In a possible implementation, at least one of the frequency domain basis sequence number and the Doppler domain basis sequence number may be a remapped sequence number.

In a possible implementation, the frequency domain basis sequence number $n_{3,l}^{(f)}$ is remapped by using $n_{3,l}^{(f)} = \left( n_{3,l}^{(f)} - n_{3,l}^{(f^*)} \right) \bmod N_3$, so that a remapped frequency domain basis sequence number corresponding to the strongest coefficient is $n_{3,l}^{(f_l^*)} = 0$, where $n_{3,l}^{(f)}$ represents a sequence number of the $N_3$ frequency domain bases, and $n_{3,l}^{(f_l^*)}$ represents the remapped frequency domain basis sequence number corresponding to the strongest coefficient in the $N_3$ frequency domain bases.

In a possible implementation, $f$ is remapped by using $f = (f - f_l^*) \bmod M$, so that a remapped frequency domain basis sequence number corresponding to the strongest coefficient is $f_l^* = 0$, where $f$ represents a sequence number of the $M$ frequency domain bases selected from the $N_3$ frequency domain bases, and $f_l^*$ represents the remapped frequency domain basis sequence number corresponding to the strongest coefficient in the $M$ frequency domain bases.

In a possible implementation, the Doppler domain basis sequence number $n_{4,l}^{(d)}$ is remapped by using $n_{4,l}^{(d)} = \left( n_{4,l}^{(d)} - n_{4,l}^{(d_l^*)} \right) \bmod N_4$, and $n_{4,l}^{(d_l^*)} = 0$ after the remapping, where $n_{4,l}^{(d)}$ represents a sequence number of the $N_4$ Doppler domain bases, and $n_{4,l}^{(d_l^*)}$ represents a remapped Doppler domain basis sequence number corresponding to the strongest coefficient in the $N_4$ Doppler domain bases.

In a possible implementation, $d$ is remapped by using $d = (d - d_l^*) \bmod Q$, so that a remapped Doppler domain basis sequence number corresponding to the strongest coefficient is $d_l^* = 0$, where $d$ represents a sequence number of the $Q$ frequency domain bases selected from the $N_4$ Doppler domain bases, and $d_l^*$ represents the remapped Doppler domain basis sequence number corresponding to the strongest coefficient in the $Q$ Doppler domain bases.

It should be noted that, for $l = 1, \ldots, \upsilon$, it is assumed that $i_l^* \in \{0, 1, \ldots, K-1\}$, $f_l^* \in \{0, 1, \ldots, M-1\}$, and $d_l^* \in \{0, 1, \ldots, Q-1\}$ are respectively a CSI-RS port sequence number, a frequency domain basis sequence number, and a Doppler domain basis sequence number that correspond to the strongest coefficient at the $l$th transport layer, in other words, $C_{l,i_l^*,f_l^*,d_l^*}$ is the strongest coefficient at the $l$th transport layer.

In a possible implementation, the terminal device may indicate, to the network device, the CSI-RS port sequence number corresponding to the strongest coefficient at the $l$th transport layer.

It should be noted that a remapped frequency domain basis is a frequency domain basis obtained by offsetting one frequency domain DFT vector, and a remapped Doppler domain basis is a Doppler domain basis obtained by offsetting one time domain DFT vector. The frequency domain remapping and the Doppler domain remapping are predefined in a protocol, so that the frequency domain basis sequence number and the Doppler domain basis sequence number that correspond to the strongest coefficient can be 0, without affecting a precoding effect. In this way, the terminal device does not need to report the frequency domain basis sequence number and the Doppler domain basis sequence number for the strongest coefficient, so that reporting overheads can be reduced.

In a possible implementation, Pri($l$,$i$, $f$, $d$) is obtained by using a first relation, and the first relation is:

$$\mathrm{Pri}(l, i, f, d) = KvD\pi(f) + Kv\varphi(d) + vi + l,$$

where $\varphi(d)$ indicates that $d$ is remapped, $\pi(f)$ indicates that $f$ is remapped, $D$ is a positive integer, and $D > \varphi(d)$. A value of $D$ may be $N_4$, and a value range of $\varphi(d)$ may be 0, 1, ..., $N_4$ -1.

In this application, that $d$ is remapped may be represented in two manners. One representation manner is $\varphi(d)$, indicating that Doppler domain basis sequence numbers of all transport layers may be of a same value, and the other representation manner is $\varphi_l(d)$, indicating that Doppler domain basis sequence numbers of different transport layers may be of different values. Similarly, that $f$ is remapped may also be represented in two manners. One representation manner is $\pi(f)$, indicating that frequency domain basis sequence numbers of all the transport layers may be of a same value, and the other manner is $\pi_l(f)$, indicating that frequency domain basis sequence numbers of the different transport layers may be of different values.

In this possible implementation, values of coefficients 1, $v$, $Kv$, and $KvD$ before four parameters $l$, $i$, $\varphi(d)$, and $\pi(f)$ from right to left on a right side of the equal sign in the first relation are in ascending order. This may indicate that influence of the four parameters $l$, $i$, $\varphi(d)$, and $\pi(f)$ on a value of the priority indication is in ascending order. A relationship between $d$ and $f$ and importance of the coefficient in the first information may be determined in advance through predefined remapping. Therefore, $d$ and $f$ have large influence on the priority indication, so that an important coefficient is reported preferentially. In the first relation, *d* is remapped in Doppler domain, so that a Doppler domain basis sequence number corresponding to the strongest coefficient may be 0, and *f* is remapped in frequency domain, so that a frequency domain basis sequence number corresponding to the strongest coefficient may be 0. In the first relation, the coefficient *Kv* of $\varphi(d)$ is less than the coefficient *KvD* of $\pi(f)$, indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

In a possible implementation, Pri(*l, i, f, d*) is obtained by using a second relation, and the second relation is:

$$\mathrm{Pri}(l, i, f, d) = KvF\varphi(d) + Kv\pi(f) + vi + l,$$

where $\pi(f)$ indicates that *f* is remapped, $\varphi(d)$ indicates that *d* is remapped, *F* is a positive integer, and $F > \pi(f)$. A value of *F* may be $N_3$, and a value range of $\pi(f)$ may be 0, 1, ..., $N_3$-1.

In this possible implementation, values of coefficients 1, *v, Kv,* and *KvF* before four parameters *l, i, $\pi(f)$,* and $\varphi(d)$ from right to left on a right side of the equal sign in the second relation are in ascending order. This may indicate that influence of the four parameters *l, i, $\pi(f)$,* and $\varphi(d)$ on the value of the priority indication is in ascending order. A relationship between d and *f* and importance of the coefficient in the first information may be determined in advance through predefined remapping. Therefore, *d* and *f* have large influence on the priority indication, so that an important coefficient is reported preferentially. In the second relation, *d* is remapped in Doppler domain, so that a Doppler domain basis sequence number corresponding to the strongest coefficient may be 0, and *f* is remapped in frequency domain, so that a frequency domain basis sequence number corresponding to the strongest coefficient may be 0. In the second relation, the coefficient *Kv* of $\pi$ (*f*) is less than the coefficient *KvF* of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, Pri(*l, i, f, d*) is obtained by using a third relation, and the third relation is:

$$\mathrm{Pri}(l, i, f, d) = Kv\phi(f, d) + vi + l,$$

where $\phi(f, d)$ indicates that both *f* and *d* are remapped.

In this application, that *f* and *d* are remapped may be represented in two manners. One manner is $\phi(f, d)$, indicating that frequency domain basis sequence numbers and Doppler domain basis sequence numbers of all the transport layers may be of a same value, and the other representation manner is $\phi_l(f, d)$, indicating that frequency domain basis sequence numbers and Doppler domain basis sequence numbers of different transport layers may be of different values. A value range of $\phi(f, d)$ may be 0, 1, ..., *D*M*-1.

In this possible implementation, values of coefficients 1, *v,* and *Kv* before three parameters *l, i,* and $\phi(f, d)$ from right to left on a right side of the equal sign in the third relation are in ascending order. This may indicate that influence of the three parameters *l, i,* and $\phi(f, d)$ on the value of the priority indication is in ascending order. A relationship between *d* and *f* and importance of the coefficient in the first information may be determined in advance through predefined remapping. Therefore, *d* and *f* have large influence on the priority indication, so that an important coefficient is reported preferentially. In the third relation, *d* is remapped in Doppler domain, so that a Doppler domain basis sequence number corresponding to the strongest coefficient may be 0, and *f* is remapped in frequency domain, so that a frequency domain basis sequence number corresponding to the strongest coefficient may be 0. The third relation indicates that when both the Doppler domain basis and the frequency domain basis are used for determining Pri(*l, i, f, d*), coefficients $C_{l,i,f,d}$ of the Doppler domain basis whose sequence number is 0 and the frequency domain basis whose sequence number is 0 and coefficients $C_{l,i,f,d}$ of a Doppler domain basis and a frequency domain basis whose sum of distances to the Doppler domain basis whose sequence number is 0 and the frequency domain basis whose sequence number is 0 is smaller are more important, and are preferentially reported.

In a possible implementation, a smaller value of $( \min(n_{3,l}^{(f)}, N_3 - n_{3,l}^{(f)}) + \min(n_{4,l}^{(d)}, N_4 - n_{4,l}^{(d)}) )$ indicates a smaller value of $\phi(f, d)$, where $n_{4,l}^{(d)}$ represents, for the *l*th layer, a sequence number corresponding to the *Q* selected Doppler domain bases in $N_4$ Doppler domain bases, $N_4$ is determined based on a quantity of time-domain units configured by the network device, $Q \le N_4$, and $N_4$ is a positive integer; and $n_{3,l}^{(f)}$ represents, for the *l*th layer, a sequence number corresponding to the *M* selected frequency domain bases in $N_3$ frequency domain bases, $N_3$ is determined based on a quantity of frequency-domain units configured by the network device, $M \le N_3$, and $N_3$ is a positive integer.

In this possible implementation, $n_{3,l}^{(f)}$ may alternatively represent a position of a delay sampling point corresponding to the $f$th frequency domain basis at the $l$th layer of the precoding matrix, and $N_3$ represents a total quantity of delay sampling points; or $n_{4,l}^{(d)}$ may represent a position of a Doppler frequency sampling point corresponding to the $d$th Doppler domain basis in at the $l$th layer of the precoding matrix, and $N_4$ represents a total quantity of Doppler frequency sampling points, and $(\min(n_{3,l}^{(f)}, N_3 - n_{3,l}^{(f)}) + \min(n_{4,l}^{(d)}, N_4 - n_{4,l}^{(d)}))$ represents a sum of a first distance and a second distance, where the first distance is a distance between the position of the delay sampling point corresponding to the $f$th frequency domain basis and a position of a 0 delay sampling point, and the second distance is a distance between the position of the Doppler frequency sampling point corresponding to the $d$th Doppler domain basis and a position of a 0 Doppler frequency sampling point. For $\min(n_{3,l}^{(f)}, N_3 - n_{3,l}^{(f)})$ and $\min(n_{4,l}^{(d)}, N_4 - n_{4,l}^{(d)})$, refer to the foregoing descriptions for understanding. Therefore, a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi(f, d)$, so that a more important coefficient can be reported preferentially.

In a possible implementation, the value range of $\phi(f, d)$ is 0, 1, ..., and $D* M$-1.

In this possible implementation, there are $D*M$ possible values for $\phi(f, d)$, in other words, there is one value for each of $D*M$ combination of Doppler domain bases and frequency domain bases, indicating that the value of the variable $\phi$ $(f, d)$ is directly related to Doppler sampling points and delay sampling points corresponding to the $D*M$ Doppler domain bases and frequency domain bases.

In a possible implementation, Pri($l$, $i$, $f$, $d$) is obtained by using a fourth relation, and the fourth relation is:

$$\mathrm{Pri}(l, i, f, d) = KvM\varphi(d) + Kvf + vi + l,$$

where $\varphi(d)$ indicates that d is remapped.

In this possible implementation, for meanings in the fourth relation, basically refer to the descriptions in the first relation for understanding. A difference is that $f$ is not remapped in the fourth relation. In this way, during calculation of Pri($l$, $i$, $f$, $d$), only $\pi(f)$ in the first relation needs to be replaced with $f$. For another specific process, refer to the foregoing descriptions of the first relation for understanding. Details are not described herein again. In the fourth relation, $d$ is remapped in Doppler domain, so that a Doppler domain basis sequence number corresponding to the strongest coefficient may be 0, and the coefficient $Kv$ of $f$ is less than the coefficient $KvM$ of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, a smaller value of $\min(n_{4,l}^{(d)}, N_4 - n_{4,l}^{(d)})$ indicates a smaller value of $\varphi(d)$, where $n_{4,l}^{(d)}$ represents, for the $l$th layer, a sequence number corresponding to the Q selected Doppler domain bases in $N_4$ Doppler domain bases, $N_4$ is determined based on a quantity of time-domain units configured by the network device, Q $\leq$ $N_4$, and $N_4$ is a positive integer.

In this possible implementation, $n_{4,l}^{(d)}$ may alternatively represent a position of a Doppler frequency sampling point corresponding to the $d$th Doppler domain basis at the $l$th layer of the precoding matrix, $N_4$ represents a total quantity of Doppler frequency sampling points, and $\min(n_{4,l}^{(d)}, N_4 - n_{4,l}^{(d)})$ represents a distance between the position of the Doppler frequency sampling point corresponding to the $d$th Doppler domain basis and a position of a 0 Doppler frequency sampling point. Because $d$ is usually a remapped Doppler domain basis sequence number, the Doppler domain basis sequence number corresponding to the strongest coefficient is $n_{4,l}^{(d_l^*)} = 0$, in other words, the strongest coefficient is at the 0 Doppler frequency sampling point. Because a coefficient closer to the strongest coefficient is more likely to have a greater amplitude, a coefficient whose Doppler frequency sampling point position is closer to the 0 Doppler frequency sampling point is more important. Therefore, a smaller value of $\min(n_{4,l}^{(d)}, N_4 - n_{4,l}^{(d)})$ indicates a smaller value of $\varphi(d)$, so that a more important coefficient can be reported preferentially.

In a possible implementation, a value of D is $N_4$, and a value range of $\varphi(d)$ is 0, 1, ..., $N_4$ -1.

In this possible implementation, there are $N_4$ possible values for $\varphi(d)$, in other words, there is one value for each of the $N_4$ Doppler domain bases, indicating that the value of the variable $\varphi(d)$ is directly related to Doppler sampling points corresponding to the $N_4$ Doppler domain bases.

In a possible implementation, $\rho(d) = \min(2 \cdot n_{4,l}^{(d)}, 2 \cdot \left(N_4 - n_{4,l}^{(d)}\right) - 1) \cdot$

In a possible implementation, a smaller value of $\min(n_{3,l}^{(f)}, N_3 - n_{3,l}^{(f)})$ indicates a smaller value of $\pi(f)$, where $n_{3,l}^{(f)}$ represents, for the $l^{\text{th}}$ layer, a sequence number corresponding to the $M$ selected frequency domain bases in $N_3$ frequency domain bases, $N_3$ is determined based on a quantity of frequency-domain units configured by the network device, $M \le N_3$, and $N_3$ is a positive integer.

In this application, the frequency-domain unit may be a subband, or may be a resource block (resource block, RB).

In this possible implementation, $n_{3,l}^{(f)}$ may alternatively represent a position of a delay sampling point corresponding to the $f^{\text{th}}$ frequency domain basis at the $l^{\text{th}}$ layer of the precoding matrix, $N_3$ represents a total quantity of delay sampling points, and $\min(n_{3,l}^{(f)}, N_3 - n_{3,l}^{(f)})$ represents a distance between the position of the delay sampling point corresponding to the $f^{\text{th}}$ frequency domain basis and a position of a 0 delay sampling point. Because $f$ is usually a remapped frequency domain basis sequence number, the frequency domain basis sequence number corresponding to the strongest coefficient is $n_{3,l}^{(f_l^*)} = 0$, in other words, the strongest coefficient is at the 0 delay sampling point. Because a coefficient closer to the strongest coefficient is more likely to have a greater amplitude, a coefficient whose delay sampling point position is closer to the 0 Doppler frequency sampling point is more important. Therefore, a smaller value of $\min(n_{3,l}^{(f)}, N_3 - n_{3,l}^{(f)})$ indicates a smaller value of $\pi(f)$, so that a more important coefficient can be reported preferentially.

In a possible implementation, a value of $F$ is $N_3$, and a value range of $\pi(f)$ is 0, 1, ..., $N_3$-1.

In this possible implementation, there are $N_3$ possible values for $\pi(f)$, in other words, there is one value for each of the $N_3$ frequency domain bases, indicating that the value of the variable $\pi(f)$ is directly related to delay sampling points corresponding to the $N_3$ frequency domain bases.

In a possible implementation, $\pi(f) = \min(2 \cdot n_{3,l}^{(f)}, 2 \cdot \left(N_3 - n_{3,l}^{(f)}\right) - 1)$.

In a possible implementation, Pri($l$, $i$, $f$, $d$) is obtained by using a fifth relation, and the fifth relation is:

$$\mathrm{Pri}(l, i, f, d) = Kv \cdot Md + Kvf + vi + l.$$

For the fifth relation, refer to the descriptions in the first relation for understanding. A difference is that $d$ and $f$ are not remapped in the fifth relation. In this way, during calculation of Pri($l$, $i$, $f$, $d$), in the first relation, only $\pi(f)$ needs to be replaced with $f$ and $\varphi(d)$ needs to be replaced with $d$. For another specific process, refer to the foregoing descriptions of the first relation for understanding. In the fifth relation, the coefficient $Kv$ of $f$ is less than the coefficient $KvM$ of $d$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible implementation, Pri($l$, $i$, $f$, $d$) is obtained by using a sixth relation, and the sixth relation is:

$$\mathrm{Pri}(l, i, f, d) = KvD\pi(f) + Kvd + vi + l,$$

where $\pi(f)$ indicates that $f$ is remapped.

In this possible implementation, for the sixth relation, refer to the first relation for understanding. A difference is that $d$ is not remapped in the sixth relation. In this way, during calculation of Pri($l$, $i$, $f$, $d$), only $\varphi(d)$ in the first relation needs to be replaced with $d$. For another specific process, refer to the foregoing descriptions of the first relation for understanding. In this solution, another possible relation for calculating the priority indication Pri($l$, $i$, $f$, $d$) is provided, to facilitate quick obtaining of Pri($l$, $i$, $f$, $d$). In the sixth relation, $f$ is remapped in frequency domain, so that a frequency domain basis sequence number corresponding to the strongest coefficient may be 0. In the sixth relation, the coefficient $Kv$ of $d$ is less than the coefficient $KvD$ of $\pi(f)$, indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

In a possible implementation, Pri($l$, $i$, $f$, $d$) is obtained by using a seventh relation, and the seventh relation is:

$$\mathrm{Pri}(l, i, f, d) = KvFd + Kv\pi(f) + vi + l,$$

where $\pi(f)$ indicates that $f$ is remapped.

In this possible implementation, for the seventh relation, refer to the second relation for understanding. A difference is that $d$ is not remapped in the seventh relation. In this way, during calculation of Pri($l$, $i$, $f$, $d$), only $\varphi(d)$ in the second relation needs to be replaced with $d$. For another specific process, refer to the foregoing descriptions of the second relation for understanding. In the seventh relation, $f$ is remapped in frequency domain, so that a frequency domain basis sequence number corresponding to the strongest coefficient may be 0. In the seventh relation, the coefficient $Kv$ of $\pi(f)$ is less than the coefficient $KvD$ of $d$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In the sixth relation and the seventh relation, when $\pi(f)$ is a variable, a smaller value of $\min(n_{3,l}^{(f)}, N_3 - n_{3,l}^{(f)})$ indicates a smaller value of $\pi(f)$. For $\min(n_{3,l}^{(f)}, N_3 - n_{3,l}^{(f)})$, refer to the foregoing corresponding descriptions for understanding.

A third aspect of this application provides a communication apparatus. The communication apparatus has a function of implementing the method according to any one of the first aspect or the possible implementations of the first aspect. The function may be implemented by hardware, or may be implemented by hardware executing corresponding software. The hardware or software includes one or more modules corresponding to the foregoing function, for example, a transceiver module and a processing module.

A fourth aspect of this application provides a communication apparatus. The communication apparatus has a function of implementing the method according to any one of the second aspect or the possible implementations of the second aspect. The function may be implemented by hardware, or may be implemented by hardware executing corresponding software. The hardware or software includes one or more modules corresponding to the foregoing function, for example, a transceiver module and a processing module.

A fifth aspect of this application provides a communication apparatus. The communication apparatus includes a processor. The processor is configured to invoke and run a computer program stored in a memory, to enable the processor to implement any one of the first aspect or the implementations of the first aspect.

Optionally, the communication apparatus further includes a transceiver. The processor is further configured to control the transceiver to send and receive a signal.

Optionally, the communication apparatus includes the memory. The memory stores the computer program.

A sixth aspect of this application provides a communication apparatus. The communication apparatus includes a processor. The processor is configured to invoke and run a computer program stored in a memory, to enable the processor to implement any one of the second aspect or the implementations of the second aspect.

Optionally, the communication apparatus further includes a transceiver. The processor is further configured to control the transceiver to send and receive a signal.

Optionally, the communication apparatus includes the memory. The memory stores the computer program.

A seventh aspect of this application provides a computer program product including instructions. When the computer program product runs on a computer, the computer is enabled to perform any one of the first aspect or the implementations of the first aspect.

An eighth aspect of this application provides a computer program product including instructions. When the computer program product runs on a computer, the computer is enabled to perform any one of the second aspect or the implementations of the second aspect.

A ninth aspect of this application provides a computer-readable storage medium, including computer instructions. When the computer instructions are run on a computer, the computer is enabled to perform any one of the first aspect or the implementations of the first aspect.

A tenth aspect of this application provides a computer-readable storage medium, including computer instructions. When the computer instructions are run on a computer, the computer is enabled to perform any one of the second aspect or the implementations of the second aspect.

An eleventh aspect of this application provides a chip apparatus, including a processor, configured to: be connected to a memory, and invoke a program stored in the memory, to enable the processor to perform any one of the first aspect or the implementations of the first aspect.

A twelfth aspect of this application provides a chip apparatus, including a processor, configured to: be connected to a memory, and invoke a program stored in the memory, to enable the processor to perform any one of the second aspect or the implementations of the second aspect.

A thirteenth aspect of this application provides a communication system. The communication system includes a terminal device and a network device, where the terminal device may be the communication apparatus according to any one of the third aspect or the implementations of the third aspect, and the network device may be the communication apparatus according to any one of the fourth aspect or the implementations of the fourth aspect.

A fourteenth aspect of this application provides a communication system. The communication system includes a terminal device and a network device, where the terminal device may be the communication apparatus according to the fifth aspect, and the network device may be the communication apparatus according to the sixth aspect.

For technical effects of any one of the third aspect and the implementations of the third aspect, and technical effects of the fifth, seventh, ninth, eleventh, and thirteenth aspects, refer to the technical effects of any one of the first aspect and the implementations of the first aspect for understanding. For technical effects of any one of the fourth aspect and the implementations of the fourth aspect, and technical effects of the sixth, eighth, tenth, twelfth, and fourteenth aspects, refer to the technical effects of any one of the second aspect and the implementations of the second aspect for understanding.

## BRIEF DESCRIPTION OF DRAWINGS

FIG. 1 is a diagram of a communication system according to an embodiment of this application;
FIG. 2 is another diagram of a communication system according to an embodiment of this application;
FIG. 3 is a diagram of control plane and data plane protocol stacks of network elements according to an embodiment of this application;
FIG. 4 is a diagram of an embodiment of a channel information reporting method according to an embodiment of this application;
FIG. 5 is a diagram of an example of Doppler domain basis selection according to an embodiment of this application;
FIG. 6A is a diagram of an example of $\varphi(d)$ according to an embodiment of this application;
FIG. 6B is a diagram of an example of $\pi(f)$ according to an embodiment of this application;
FIG. 6C is a diagram of an example of $\phi(f, d)$ according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of a terminal device according to an embodiment of this application; and
FIG. 10 is a diagram of a structure of a network device according to an embodiment of this application.

## DESCRIPTION OF EMBODIMENTS

The following describes embodiments of this application with reference to the accompanying drawings. It is clear that the described embodiments are merely some rather than all of embodiments of this application. Persons of ordinary skill in the art may know that with development of technologies and emergence of new scenarios, technical solutions provided in embodiments of this application are also applicable to similar technical problems.

In the specification, claims, and accompanying drawings of this application, terms such as "first" and "second" are intended to distinguish between similar objects, but do not necessarily indicate a specific order or sequence. It should be understood that data used in such a way are interchangeable in proper circumstances, so that embodiments described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to the process, method, product, or device.

In embodiments of this application, "indicate" may include direct indicating and indirect indicating, or may include explicit indicating and implicit indicating. When a piece of indication information is described as indicating A, the indication information may directly indicate A or indirectly indicate A, but it does not indicate that the indication information definitely carries A. Information indicated by specific information (configuration information in the following descriptions) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using a pre-agreed (for example, protocol-stipulated) arrangement sequence of a plurality of pieces of information, to reduce indication overheads to some extent. In addition, a common part of all pieces of information may be identified and indicated in a unified manner, to reduce indication overheads caused by separately indicating same information. In this way, the indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, medium access control layer signaling, and physical layer signaling.

In embodiments of this application, for ease of description, when numbering is involved, numbers may be consecutive and start from 0. For example, $K$ spatial domain basis sequence numbers may include a $0^{th}$ spatial domain basis sequence number to a $(K - 1)^{th}$ spatial domain basis sequence number, $M$ frequency domain basis sequence numbers may include a $0^{th}$ frequency domain basis sequence number to an $(M - 1)^{th}$ frequency domain basis sequence number, and $Q$ Doppler domain basis sequence numbers may include a $0^{th}$ Doppler domain basis sequence number to a $(Q - 1)^{th}$ Doppler domain basis sequence number. Certainly, this imposes no limitation during specific implementation. For example, numbers may alternatively be consecutive and start from 1. For example, $v$ transport layers may include a $1^{st}$ transport layer to a $v^{th}$ transport layer. For brevity, no enumeration is provided herein. It should be understood that the foregoing descriptions are all settings for ease of describing the technical solutions provided in embodiments of this application, but are not intended to limit the scope of this application. For example, the $K$ spatial domain basis sequence numbers may alternatively include a $1^{st}$ spatial domain basis sequence number to a $K^{th}$ spatial domain basis sequence number, the $M$ frequency domain basis sequence numbers may alternatively include a $1^{st}$ frequency domain basis sequence number to an $M^{th}$ frequency domain basis sequence number, the $Q$ Doppler domain basis sequence numbers may alternatively include a $1^{st}$ Doppler domain basis sequence number to a $Q^{th}$ Doppler domain basis sequence number, and the $v$ transport layers may alternatively include a $0^{th}$ transport layer to a $(v - 1)^{th}$ transport layer.

Embodiments of this application provide a channel information reporting method, to enable a terminal device to report CSI-RS port, frequency domain, and Doppler domain (time domain) related information to a network device based on a priority indication by using a PMI. According to the method, the terminal device can preferentially send more important information in the PMI corresponding to information about a predicted channel, so that precoding accuracy of the network device is improved and communication quality during movement of the terminal device is ensured. This application further provides a corresponding communication apparatus, communication system, computer-readable storage medium, computer program product, and the like. Details are separately described below.

The technical solutions in embodiments of this application may be applied to various wireless communication systems, for example, NR of a 5G system, an LTE system, an LTE frequency division duplex (frequency division duplex, FDD) system, an LTE time division duplex (time division duplex, TDD) system, a mobile communication system (for example, a 6G mobile communication system) after a 5G network, and a vehicle to everything (vehicle to everything, V2X) communication system. The wireless communication system to which this application is applicable includes a terminal device and a network device. The terminal device and the network device may communicate with each other through a wireless channel.

The following describes the terminal device and the network device in this application.

The terminal device may be a wireless terminal device that can receive scheduling and indication information from the network device. The wireless terminal device may be a device that provides a user with voice and/or data connectivity, or a handheld device with a wireless connection function, or another processing device connected to a wireless modem.

The terminal device, also referred to as a user equipment (user equipment, UE), a mobile station (mobile station, MS), a mobile terminal (mobile terminal, MT), or the like, is a device that includes a wireless communication function (providing a user with voice and/or data connectivity), for example a handheld device with a wireless connection function. Currently, some examples of the terminal device are a mobile phone (mobile phone), a tablet computer, a notebook computer, a palmtop computer, a wireless router, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in vehicle to everything, a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). For example, a wireless terminal in vehicle to everything may be a vehicle-mounted device, an entire vehicle device, a vehicle-mounted module, a vehicle, or the like. A wireless terminal in industrial control may be a robot or the like. For example, a wireless terminal in self driving may be an uncrewed aerial vehicle.

The network device may be a device in a wireless network. For example, the network device may be a radio access network (radio access network, RAN) node that connects the terminal device to the wireless network, and may also be referred to as a radio access network device. The radio access network device is an apparatus that is deployed in a radio access network and that provides a wireless communication function for the terminal device. A non-limitative example of the radio access network device is a base station, and the base station is a macro base station, a micro base station (also referred to as a small cell), a relay station, an access point (access point, AP), a wearable device, a vehicle-mounted device, and the like in various forms. The base station may alternatively be a transmission reception node (transmission and reception point, TRP), a transmission measurement function (transmission measurement function, TMF), or the like. For example, the base station in embodiments of this application may be a base station in new radio (new radio, NR). The base station in 5G NR may also be referred to as a transmission reception point (transmission reception point, TRP), a transmission point (transmission point, TP), or a next generation NodeB (next generation NodeB, ngNB), or an evolved NodeB (evolved NodeB, eNB, or eNodeB) in a long term evolution (long term evolution, LTE) system. In a broad sense, the base station may alternatively be a baseband unit (baseband Unit, BBU), a remote radio unit (remote radio Unit, RRU), an active antenna unit (active antenna unit, AAU), a radio head (remote radio head, RRH), a central unit (centralized unit, CU), a distributed unit (distributed unit, DU), a positioning node, or the like.

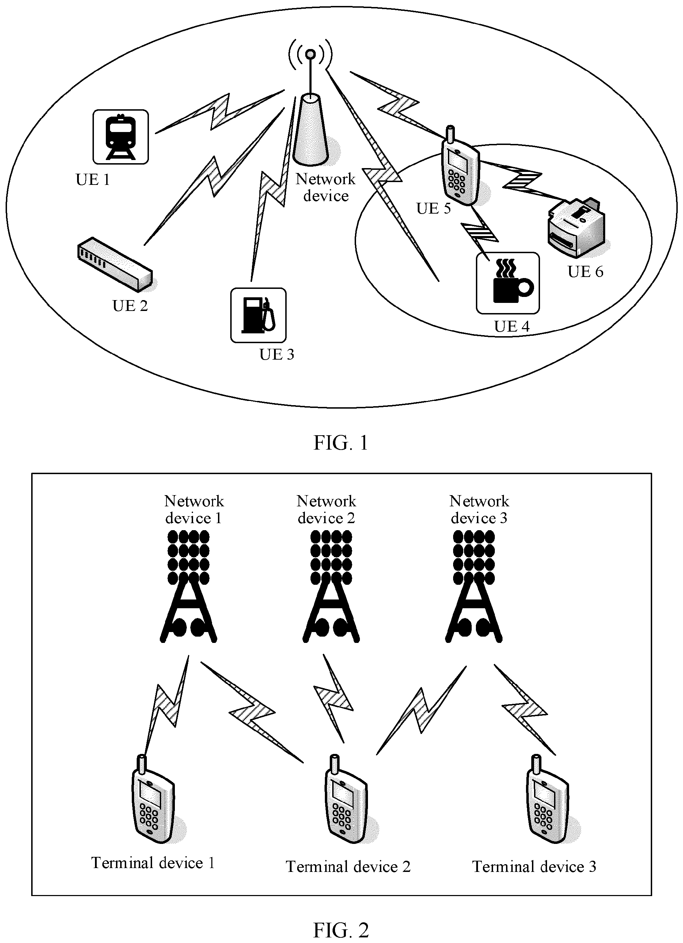

FIG. 1 is a diagram of a communication system according to an embodiment of this application. The communication system shown in FIG. 1 includes a network device and terminal devices. The communication system includes one or more network devices and one or more terminal devices. In the communication system, all of a UE 1 to a UE 6 may communicate with the network device. In addition, the UE 4, the UE 5, and the UE 6 may also form a communication system. For example, the network device may send downlink information to the UE 5, and the UE 5 may send downlink information to the UE 4 or the UE 6. Optionally, the communication system shown in FIG. 1 may be an LTE system, a 5G mobile communication system, or a mobile communication system (for example, a 6G mobile communication system) after a 5G network.

FIG. 2 is another diagram of a communication system according to an embodiment of this application. The communication system shown in FIG. 2 includes a network device and a terminal device. The communication system includes one or more network devices and one or more terminal devices.

In the communication system, in a possible implementation, communication transmission may be performed between one network device and one or more terminal devices. For example, as shown in FIG. 2, a network device 1 separately communicates with a terminal device 1 and a terminal device 2. A network device 3 separately communicates with the terminal device 2 and a terminal device 3. In another possible implementation, a plurality of network devices may communicate with one terminal device, in other words, the plurality of network devices simultaneously serve one terminal device. For example, the network device 1, a network device 2, and the network device 3 simultaneously serve the terminal device 2.

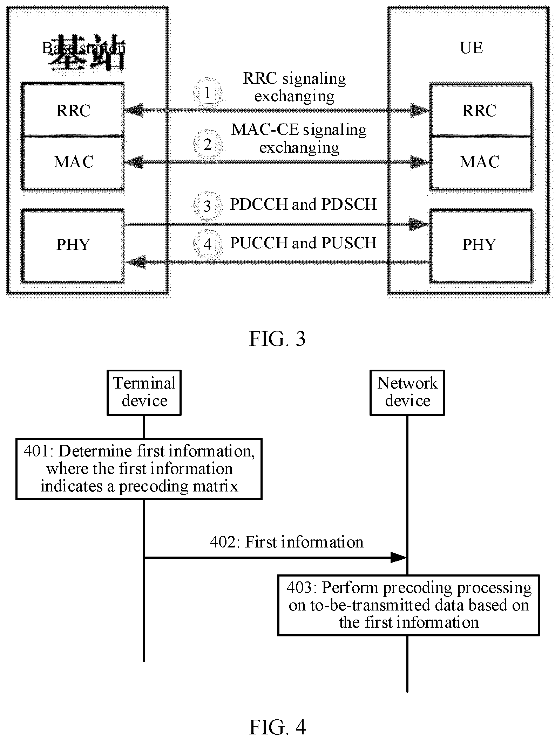

For example, a structure of some control plane and data plane protocol stacks of the network elements in this application is shown in FIG. 3. Both the network device and the terminal device have the following modules:

a radio resource control (radio resource control, RRC) layer signaling exchanging module, where the network device and the terminal device may send and receive RRC signaling based on the module;

a media access control (media access control, MAC) layer signaling exchanging module, where the network device and the terminal device may send and receive medium access control-control element (media access control-control element, MAC-CE) signaling based on the module; and

a physical (physical, PHY) layer signaling and data exchanging module, where the network device and the terminal device may send and receive uplink/downlink control signaling based on the module; for example, the signaling may include signaling carried on a physical downlink control channel (physical downlink control channel, PDCCH) and signaling carried on a physical uplink control channel (physical uplink control channel, PUCCH); or the network device and the terminal device may send and receive uplink/downlink data based on the module; for example, the data may include data carried on a physical downlink shared channel (physical downlink shared channel, PDSCH) and data carried on a physical uplink data channel (physical uplink shared channel, PUSCH).

It should be understood that the foregoing content is merely some examples of the communication system in this application. A communication system in which the channel information reporting method and the communication apparatus provided in this application are used may include but is not limited to the foregoing communication system.

The following describes some technical terms in this application.

1. Precoding technology: A signal sending device (for example, a network device in downlink transmission or a terminal device in uplink transmission) may process, when a state of a channel between the sending device and a receiving device is known, a to-be-sent signal by using a precoding matrix that matches the channel and then send the signal, so that a precoded sent signal adapts to the channel. Therefore, in comparison with a processing process in which the receiving device receives a non-precoded sent signal and eliminates inter-channel impact, complexity of a processing process in which the receiving device receives a precoded sent signal and eliminates inter-channel impact is reduced. Therefore, precoding processing is performed on the to-be-sent signal, so that received signal quality (for example, a signal to interference plus noise ratio, SINR) is improved. Transmission between a sending device and a plurality of receiving devices can further be performed on a same time-frequency resource by using the precoding technology, in other words, multi-user multiple-input multiple-output (multiple user multiple input multiple output, MU-MIMO) is implemented. It should be noted that the related descriptions of the precoding technology are merely examples for ease of understanding, and not intended to limit the protection scope of embodiments of this application. In a specific implementation process, the sending device may alternatively perform precoding processing in another manner. For example, when channel information (for example, but not limited to a channel matrix) cannot be learned of, precoding processing is performed by using a preset precoding matrix or in a weighted processing manner. For brevity, specific content thereof is not described in this specification.

2. Precoding matrix indicator (precoding matrix indicator, PMI): It may indicate a precoding matrix. The precoding matrix may be, for example, a precoding matrix determined by a terminal device based on a channel matrix of one frequency-domain unit or a plurality of frequency-domain units. The channel matrix may be determined by the terminal device through channel estimation or in another manner or based on channel reciprocity. However, it should be understood that a specific method of determining the precoding matrix by the terminal device is not limited to the foregoing descriptions. For specific implementations, refer to a conventional technology. For brevity, no enumeration is provided herein.

For example, the precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For a manner of determining the precoding matrix, refer to the conventional technology. For brevity, no enumeration is provided herein.

It should be noted that, according to the channel information reporting method provided in embodiments of this application, a network device may restore a precoding matrix based on a plurality of coefficients $C_{l,i,f,d}$ reported by a terminal device. Because $C_{l,i,f,d}$ indicates a weighting coefficient of an $l^{th}$ transport layer, an $i^{th}$ CSI-RS port, an $f^{th}$ frequency domain basis, and a $d^{th}$ Doppler domain basis that correspond to the precoding matrix, the precoding matrix restored by the network device also includes data in these dimensions. Because the precoding matrix includes information about the Doppler domain basis, precoding can effectively match a fast-varying channel on which the mobile terminal device is located. The precoding matrix may be directly used for downlink data transmission. Alternatively, some beamforming methods, including, for example, zero forcing (zero forcing, ZF), regularized zero-forcing (regularized zero-forcing, RZF), a minimum mean square error (minimum mean-squared error, MMSE), and a maximum signal-to-leakage-and-noise ratio (signal-to-leakage-and-noise, SLNR), may be performed to obtain a precoding matrix that is finally used for downlink data transmission. This is not limited in this application. Unless specifically described, all precoding matrices below may be precoding matrices determined according to the method provided in this application.

It may be understood that the precoding matrix determined by the terminal device may be understood as a to-be-reported precoding matrix. The terminal device may indicate the to-be-reported precoding matrix by using the PMI, so that the network device restores the precoding matrix based on the PMI. It may be understood that the precoding matrix restored by the network device based on the PMI may be the same as or similar to the to-be-reported precoding matrix.

In downlink data transmission, a higher approximation degree between a precoding matrix determined by the network device based on the PMI and a precoding matrix determined by the terminal device indicates that the precoding matrix determined by the network device for data transmission is more adaptable to a channel state. In this way, signal received quality can be improved.

3. Transport layer (layer): It may also be referred to as a spatial layer. In MIMO, a transport layer may be considered as a data stream whose transmission can be independently performed, and each transport layer may have one transport layer sequence number. To improve spectrum resource utilization and improve a data transmission capability of a communication system, a network device may transmit data to a terminal device through a plurality of transport layers.

A quantity of transport layers is a rank of a channel matrix. The terminal device may determine the quantity of transport layers based on the channel matrix obtained through channel estimation. A precoding matrix may be determined based on the channel matrix. For example, the precoding matrix may be determined by performing SVD on the channel matrix or a covariance matrix of the channel matrix. In the SVD process, different transport layers may be distinguished based on eigenvalues. For example, a precoding vector determined by using an eigenvector corresponding to a maximum eigenvalue may correspond to a $1^{st}$ transport layer, and a precoding vector determined by using an eigenvector corresponding to a minimum eigenvalue may correspond to an $R^{th}$ transport layer. In other words, eigenvalues corresponding to the $1^{st}$ transport layer to the $R^{th}$ transport layer are in descending order. Simply speaking, in the R transport layers, strengths from the $1^{st}$ transport layer to the $R^{th}$ transport layer are in descending order.

It should be understood that distinguishing between the different transport layers based on the eigenvalues is merely a possible implementation, and should not constitute any limitation on this application. For example, another criterion for distinguishing between transport layers may be predefined in a protocol. This is not limited in this application.

4. Weighting coefficient: It is also referred to as a combination coefficient or a projection coefficient, and represents a weight of a channel for a spatial-frequency-time joint vector. One spatial-frequency-time joint vector corresponds to one CSI-RS port vector, one frequency-domain two-dimensional discrete Fourier transform (discrete Fourier transform, DFT) vector, and one Doppler domain (time domain) DFT vector. The weighting coefficient includes an amplitude and a phase. For example, in a spatial-frequency-time weighting coefficient $ae^{j\theta}$, a represents an amplitude, and $\theta$ represents a phase. The weighting coefficient and a vector group including one CSI-RS port vector, one frequency domain DFT vector obtained by offsetting one frequency domain DFT vector, and one time domain DFT vector obtained by offsetting one time domain DFT vector are in one-to-one correspondence. In other words, each weighting coefficient corresponds to one CSI-RS port vector, one frequency domain DFT vector, and one Doppler domain DFT vector.

A weighting coefficient with a largest amplitude at each transport layer is referred to as a strongest coefficient. A position indicator of a spatial-frequency vector corresponding to the strongest coefficient is a strongest coefficient indicator (strongest coefficient indicator, SCI).

Optionally, the SCI may indicate only a position of a CSI-RS port corresponding to the spatial-frequency vector of the strongest coefficient in a set of CSI-RS ports selected by the terminal device.

Optionally, the SCI further indicates a position of a frequency domain DFT vector corresponding to the spatial-frequency vector of the strongest coefficient in a set of frequency domain DFT vectors selected by the terminal device and/or a position of a time domain DFT vector corresponding to the spatial-frequency vector of the strongest coefficient in a set of time domain DFT vectors selected by the terminal device.

Optionally, each transport layer has one strongest coefficient. Therefore, each transport layer has one SCI, in other words, a plurality of transport layers correspond to a plurality of SCIs, where any two of the plurality of SCIs may be the same or may be different.

5. Spatial domain (spatial domain): It is a dimension used to describe a change rule of signal energy, and usually includes a plurality of spatial domain bases.

6. Spatial domain basis (spatial domain basis): Each spatial domain basis has one spatial domain basis sequence number. The spatial domain basis includes a spatial domain basis vector, and the spatial domain basis vector may also be referred to as a beam vector, a spatial domain vector, or a spatial domain beam basis vector. One or more spatial domain basis vectors form a spatial domain basis. Each spatial domain basis vector corresponds to one transmit beam of a transmitting end device, and each element in the spatial domain basis vector may be represented as a weight of each antenna port. Based on the weights of all the antenna ports represented by all the elements in the spatial domain basis vector, signals of all the antenna ports are linearly superimposed to form a region with stronger signals in a direction in space. Optionally, the spatial domain basis vector is obtained from a DFT matrix. Each column vector in the two-dimensional DFT matrix may be referred to as a two-dimensional DFT vector. In other words, the spatial domain basis vector may be a two-dimensional DFT vector, and the two-dimensional DFT vector may be usually used to describe a beam obtained by superposing a beam in a horizontal direction and a beam in a vertical direction.

7. CSI-RS port: Each CSI-RS port may be understood as one spatial domain basis (spatial domain basis), and the CSI-RS port and the spatial domain basis are merely different names in different communication versions.

8. Frequency domain (frequency domain): It is a dimension used to describe a frequency feature of a signal, and usually includes a plurality of frequency domain bases (frequency domain bases).

9. Frequency domain basis: Each frequency domain basis has one frequency domain basis sequence number. The frequency domain basis includes a frequency domain basis vector. The frequency domain basis vector may also be referred to as a frequency domain vector, and is a vector that may indicate a change rule of a channel in frequency domain. One or more frequency domain basis vectors form a frequency domain basis. Each frequency domain basis vector may represent one change rule. When a signal is transmitted through a wireless channel, the signal may arrive at a receive antenna through a plurality of paths from a transmit antenna. Frequency selective fading caused by delays on multiple paths is a change of a frequency domain channel. Therefore, change rules, caused by delays on different transmission paths, of the channel in frequency domain may be represented by using different frequency domain basis vectors. Optionally, the frequency domain basis vector may be selected from a DFT matrix or an inverse discrete Fourier transform (inverse discrete Fourier transform, IDFT) matrix (namely, a conjugate transposition matrix of the DFT matrix). In other words, the frequency domain basis vector may be a DFT vector or an IDFT vector.

A length of the frequency domain basis vector may be determined based on a quantity of to-be-reported frequency-domain units that is preconfigured in a reporting bandwidth, may be determined based on a length of the reporting bandwidth, or may be a value predefined in a protocol. The length of the frequency domain basis vector is not limited in this application. The reporting bandwidth may be a CSI reporting bandwidth (CSI-ReportingBand) carried in a CSI reporting configuration in higher layer signaling (for example, an RRC message).

10. Doppler domain (Doppler domain): It is a dimension used to describe a change rule of a signal over time, and usually includes a plurality of Doppler domain bases (Doppler domain bases).

11. Doppler domain basis: Each Doppler domain basis has one Doppler domain basis sequence number. The Doppler domain basis includes a Doppler domain basis vector. The Doppler domain basis vector may also be referred to as a time domain basis vector, and is a vector that may indicate a change rule of a channel in time domain. One or more Doppler domain basis vectors form a Doppler domain basis. Each Doppler domain basis vector may represent one change rule. When a signal is transmitted through a wireless channel, the signal may arrive at a receive antenna through a plurality of paths from a transmit antenna. Time selective fading caused by different Doppler frequency shifts on multiple paths is a change of a time domain channel. Therefore, a change rule of the channel in time domain that is caused by Doppler frequency shifts on different transmission paths may be represented by using different time domain basis vectors. Optionally, the time domain basis vector may be selected from a DFT matrix or an IDFT matrix. In other words, the time domain basis vector may be a DFT vector or an IDFT vector. It should be noted that, in embodiments of this application, a Doppler domain basis and a time domain basis may be used in a cross manner, but should not be understood as two different features. Both the Doppler domain basis and the time domain basis may be used to describe discrete Fourier transform of a channel from a Doppler domain to a time domain or from a time domain to a Doppler domain.

The technical solutions provided in embodiments of this application are described below with reference to the accompanying drawings.

FIG. 4 is a diagram of an embodiment of a channel information reporting method according to an embodiment of this application. As shown in FIG. 4, the method includes the following steps.

401: A terminal device determines first information, where the first information indicates a precoding matrix.

In this application, the first information may be a precoding matrix indicator (precoding matrix indicator, PMI). The first information includes a part or all of a plurality of coefficients $C_{l,i,f,d}$, where $l = 1, 2, ... , v$ is a transport layer sequence number, $i = 0, 1, ... , K - 1$ is a CSI-RS port sequence number or a spatial domain basis sequence number, $f = 0, 1, ..., M - 1$ is a frequency domain basis sequence number, $d = 0, 1, ..., Q - 1$ is a Doppler domain basis sequence number, v represents a quantity of transport layers, $K$ represents a quantity of CSI-RS ports or a quantity of spatial domain bases, $M$ represents a quantity of frequency domain bases, and $Q$ represents a quantity of Doppler domain bases, where v, $K$, $M$, and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and the coefficient $C_{l,i,f,d}$ corresponds to a priority indication Pri($l, i, f, d$), and the coefficients $C_{l,i,f,d}$ in the first information are arranged based on Pri($l, i, f, d$). It should be noted that in embodiments of this application, the sequence number may also be referred to as an index, an identifier, or the like.

For example, a value set of v may be {1, 2, 3, 4}, in other words, the quantity of transport layers may be 1, 2, 3, or 4; a value set of $K$ may be {4, 8}, in other words, the quantity of CSI-RS ports or the quantity of spatial domain bases may be 4 or 8; a value set of $M$ may be {4, 7}, in other words, the quantity of frequency domain bases may be 4 or 7; and a value set of $Q$ may be {2, 3, 4}, in other words, the quantity of Doppler domain bases may be 2, 3, or 4. Certainly, values of v, $K$, $M$, and $Q$ are merely examples herein. Value ranges of these parameters are not limited in this application.

In embodiments of this application, weighting coefficients in the first information may be arranged based on priority indications. The priority indications corresponding to the coefficients $C_{l,i,f,d}$ may be represented in a value form, for example, 1, 2, ....

For example, when the priority indication is 1, a corresponding coefficient may be a weighting coefficient $C_{1,0,0,0}$ when the transport layer sequence number $l = 1$, the CSI-RS port sequence number i=0, the frequency domain basis sequence number $f$=0, and the Doppler domain basis sequence number $d$=0. When the priority indication is 2, a corresponding coefficient may be a weighting coefficient $C_{2,0,0,0}$ when the transport layer sequence number $l = 2$, the CSI-RS port sequence number i=0, the frequency domain basis sequence number $f$=0, and the Doppler domain basis sequence number $d$=0. $C_{1,0,0,0}$ and $C_{2,0,0,0}$ may be arranged based on priorities of the priority indications 1 and 2. It should be understood that the correspondence between the value of the priority indication and $l, i, f, d$ is an example. Embodiments of this application provide a plurality of implementations of the correspondence.

402: The terminal device sends first information to a network device. Correspondingly, the network device receives the first information.

403: The network device performs precoding processing on to-be-transmitted data based on the first information.

In embodiments of this application, when reporting, to the network device, the first information indicating the precoding matrix, the terminal device reports CSI-RS port and frequency domain related information, and further reports Doppler domain related information. In addition, the terminal device may send, based on the priority indication, the coefficient $C_{l,i,f,d}$ indicating the precoding matrix. In this way, the terminal device can preferentially send more important information in the precoding matrix corresponding to information about a predicted channel. In this way, the network device may perform precoding processing based on the information about the channel predicted by the terminal device, so that precoding accuracy is improved, and communication quality during movement of the terminal device is ensured.

In embodiments of this application, the coefficient $C_{l,i,f,d}$ included in the first information may be indicated by using Pri($l, i, f, d$), or may be indicated by using a value of a bit $B_{l,i,f,d}$ in a first bitmap (bitmap), where $B_{l,i,f,d}$ represents a bit of the $l^{th}$ transport layer, the $i^{th}$ CSI-RS port or spatial domain basis, the $f^{th}$ frequency domain basis, and the $d^{th}$ Doppler domain basis in the first bitmap. In addition, Pri($l, i, f, d$) may indicate a priority of the coefficient $C_{l,i,f,d}$, and may further indicate a priority of the bit $B_{l,i,f,d}$, which are separately described below.

1. Pri($l$, $i$, $f$, $d$) indicates the priority of the coefficient $C_{l,i,f,d}$.

When Pri($l$, $i$, $f$, $d$) indicates the priority of the coefficient $C_{l,i,f,d}$, a smaller value of Pri($l$, $i$, $f$, $d$) indicates a higher priority of the coefficient $C_{l,i,f,d}$; or a larger value of Pri($l$, $i$, $f$, $d$) indicates a higher priority of the coefficient $C_{l,i,f,d}$.

A higher priority of the coefficient $C_{l,i,f,d}$ indicates that the coefficient $C_{l,i,f,d}$ is ranked higher in a field included in the first information; and a lower priority of the coefficient $C_{l,i,f,d}$ indicates that the coefficient $C_{l,i,f,d}$ is ranked lower in the field included in the first information.

For example, if there are a first coefficient $C_{l,i,f,d}$ and a second coefficient $C_{l,i,f,d}$, when a priority of the first coefficient $C_{l,i,f,d}$ is higher than a priority of the second coefficient $C_{l,i,f,d}$, the first coefficient $C_{l,i,f,d}$ is ranked before the second coefficient $C_{l,i,f,d}$ in an information field used to carry the first information.

The information field that carries a first field may be a field (field), an information element (information element), or the like in a message that carries the first field.

For example, if a priority indication of the first coefficient $C_{l,i,f,d}$ is 1, and a priority indication of the second coefficient $C_{l,i,f,d}$ is 2, the first coefficient $C_{l,i,f,d}$ may be represented as $C_{1,0,0,0}$, and the second coefficient $C_{l,i,f,d}$ may be represented as $C_{2,0,0,0}$. If a priority of the priority indication 1 is higher than that of the priority indication 2, $C_{1,0,0,0}$ is ranked before $C_{2,0,0,0}$ in the information field used to carry the first information; or if a priority of the priority indication 1 is lower than that of the priority indication 2, $C_{1,0,0,0}$ is ranked after $C_{2,0,0,0}$ in the information field used to carry the first information. In this manner, a lower priority of the coefficient $C_{l,i,f,d}$ indicates that the coefficient $C_{l,i,f,d}$ is more preferentially omitted when only some fields of the first information can be sent due to a limitation of a length of UCI (for example, a maximum length of the UCI may be 1706 bits). For example, a smaller value of the priority indication Pri($l$, $i$, $f$, $d$) indicates a higher priority of the coefficient $C_{l,i,f,d}$. If the field of the first information can accommodate only 20 $C_{l,i,f,d}$, the 20 $C_{l,i,f,d}$ are sequentially sorted in the first information based on values of Pri($l$, $i$, $f$, $d$) from 1 to 20 in ascending order of the values of Pri($l$, $i$, $f$, $d$), and sending of $C_{l,i,f,d}$ corresponding Pri($l$, $i$, $f$, $d$) whose value starting from 20 needs to be omitted. In this example, the first coefficient may be one or more of the 20 $C_{l,i,f,d}$, and the second coefficient may be one or more of coefficients $C_{l,i,f,d}$ corresponding to values that are of Pri($l$, $i$, $f$, $d$) and that start from 21. For example, in the foregoing example, when a length of the information field is limited, the first information may include the first coefficient $C_{l,i,f,d}$ but does not include the second coefficient $C_{l,i,f,d}$.

It can be learned that, when only some fields of the first information can be sent, a more important coefficient may be preferentially sent as much as possible by using the priority indication. This helps further ensure communication quality.

Optionally, the foregoing described plurality of coefficients $C_{l,i,f,d}$ may be distributed in a first group and a second group, where a priority of the coefficient $C_{l,i,f,d}$ in the first group is higher than a priority of the coefficient $C_{l,i,f,d}$ in the second group, and the first information includes the coefficient $C_{l,i,f,d}$ in the first group.

The first group may include $A_1$ higher-priority coefficients $C_{l,i,f,d}$, and the second group may include $A_2$ lower-priority coefficients $C_{l,i,f,d}$. A sum of $A_1$ and $A_2$ may be equal to a total quantity of weighting coefficients, or may be less than the total quantity of weighting coefficients. When the terminal device has no sufficient grant resource to report all the weighting coefficients, the terminal device may preferentially omit the $A_2$ lower-priority coefficients $C_{l,i,f,d}$ in the second group, and preferentially report the $A_1$ higher-priority coefficients $C_{l,i,f,d}$ In this way, a more important coefficient that needs to be reported is specified.

2. The coefficient $C_{l,i,f,d}$ included in the first information is indicated by using the value of the bit $B_{l,i,f,d}$ in the first bitmap.

A length of the first bitmap is usually $vKMQ$, and the first bitmap may include a plurality of bits $B_{l,i,f,d}$. The terminal device may indicate, by using the value of the bit $B_{l,i,f,d}$ in the first bitmap, the coefficient $C_{l,i,f,d}$ included in the first information.

The first information may include a coefficient other than a strongest coefficient in coefficients $C_{l,i,f,d}$ corresponding to a bit $B_{l,i,f,d}$ with a first value.

Optionally, because all coefficients are obtained through normalization by using the strongest coefficient as a reference, in other words, the strongest coefficient is fixed at 1, the strongest coefficient can be learned of by the network device without being reported, and does not need to be reported. Therefore, the first information may not include the strongest coefficient corresponding to the bit $B_{l,i,f,d}$ with the first value.

The value of the bit $B_{l,i,f,d}$ in the first bitmap may be the first value, or may be a second value. The first value may be 1, and the second value may be 0. Alternatively, the first value may be 0, and the second value may be 1. If $C_{l,i,f,d}$ indicated by the first value is not the strongest coefficient at the $l$th transport layer, $C_{l,i,f,d}$ is reported in the first information. $C_{l,i,f,d}$ indicated by the second value and the strongest coefficient at the $l$th transport layer that is indicated by the first value may be omitted and not reported. For example, when $C_{l,i,f,d}$ corresponding to a bit with a value of 1 in the first bitmap is not the strongest coefficient, $C_{l,i,f,d}$ is reported in the first information, and $C_{l,i,f,d}$ corresponding to a bit with a value of 2 in the first bitmap and the strongest coefficient corresponding to the bit with the value of 1 in the first bitmap may be omitted and not reported.

3. Pri($l$, $i$, $f$, $d$) further indicates the priority of the bit $B_{l,i,f,d}$ in the first bitmap.

When Pri($l$, $i$, $f$, $d$) further indicates the priority of the bit $B_{l,i,f,d}$, a smaller value of Pri($l$, $i$, $f$, $d$) indicates a higher priority of the bit $B_{l,i,f,d}$; or a larger value of Pri(*l, i, f, d*) indicates a higher priority of the bit $B_{l,i,f,d}$.

A higher priority of the bit $B_{l,i,f,d}$ indicates a higher position corresponding to the bit $B_{l,i,f,d}$ in the first bitmap, and a lower priority of the bit $B_{l,i,f,d}$ indicates a lower position corresponding to the bit $B_{l,i,f,d}$ in the first bitmap.

Optionally, the foregoing described plurality of bits $B_{l,i,f,d}$ in the first bitmap may be distributed in a third group and a fourth group, where a priority of the bit $B_{l,i,f,d}$ in the third group is higher than a priority of the bit $B_{l,i,f,d}$ in the fourth group.

It should be noted that, the third group may be the first group, or may be another group independent of the first group, and the fourth group may be the second group, or may be another group independent of the second group. The third group may include $A_1$ highest-priority bits $B_{l,i,f,d}$, the fourth group may include $A_2$ lowest-priority bits $B_{l,i,f,d}$, the length of the first bitmap is $vKMQ$, and the third group may alternatively include $vKMQ$-$A_2$ highest-priority bits $B_{l,i,f,d}$. When all the bits $B_{l,i,f,d}$ cannot be reported due to the limitation of the length of the UCI, the terminal device may preferentially omit the $A_2$ lowest-priority coefficients $B_{l,i,f,d}$ in the fourth group, and preferentially report the $vKMQ$-$A_2$ highest-priority coefficients $C_{l,i,f,d}$ in the third group. In this embodiment, a more important bit $B_{l,i,f,d}$ that needs to be reported is specified. In this manner, both the coefficients $C_{l,i,f,d}$ and the bits $B_{l,i,f,d}$ may be grouped by using the priority indication Pri(*l,i,f,d*), to reduce reporting overheads as much as possible.

In addition, the foregoing described K CSI-RS ports may be selected by the terminal device from more CSI-RS ports, the M frequency domain bases may be selected by the terminal device from more frequency domain bases, and the Q Doppler domain bases may be selected by the terminal device from more Doppler domain bases, which are separately described below.

1. The *K* CSI-RS ports or *K* spatial domain bases are selected.

The *K* CSI-RS ports are a part or all of CSI-RS ports selected by the terminal device from *P* CSI-RS ports, where *P* is a quantity of CSI-RS ports configured by the network device or predefined in a protocol, $K \le P$, and *K* and *P* are all positive integers.

The *K* spatial domain bases are a part or all of spatial domain bases selected by the terminal device from *P* spatial domain bases, where *P* is a quantity of spatial domain bases configured by the network device or predefined in a protocol, $K \le P$, and *K* and *P* are all positive integers.

Optionally, the network device sends assistance information to the terminal device, so that the terminal device determines *K*.

2. The *M* frequency domain bases are selected.

The *M* frequency domain bases are a part or all of frequency domain bases selected by the terminal device from $N_3$ frequency domain bases, where $N_3$ is determined based on a quantity of frequency-domain units configured by the network device or predefined in a protocol, $M \le N_3$, and M and $N_3$ are all positive integers. Optionally, the network device sends assistance information to the terminal device, so that the terminal device determines *M*. For example, the frequency-domain unit may be a subband (subband), a resource block (resource block, RB), or a resource unit (resource element). This is not limited in this application.

In embodiments of this application, a sequence number corresponding to the M frequency domain bases selected by the terminal device from the $N_3$ frequency domain bases is represented by $n_{3,l}^{(f)}$, where *l* = 1, 2, ... , *v* is the transport layer sequence number, and *f* = 0, 1, ... , *M* - 1; in other words, in the *M* frequency domain bases at the *l*th transport layer, the frequency domain basis with the sequence number *f* corresponds to the frequency domain basis with the sequence number $n_{3,l}^{(f)}$ in the $N_3$ frequency domain bases.

3. The *Q* Doppler domain bases are selected.

The *Q* Doppler domain bases are a part or all of Doppler domain bases selected by the terminal device from $N_4$ Doppler domain bases, where $N_4$ is determined based on a quantity of time-domain units configured by the network device or predefined in a protocol, $Q \le N_4$, and Q and $N_4$ are all positive integers. Optionally, the network device sends assistance information to the terminal device, so that the terminal device determines *Q*.

In embodiments of this application, a sequence number corresponding to the *Q* Doppler domain bases selected by the terminal device from the $N_4$ Doppler domain bases is represented by $n_{4,l}^{(d)}$, where *l* = 1, 2, ... , *v* is the transport layer sequence number, and *d* = 0,1, ..., *Q* - 1; in other words, in the *Q* Doppler domain bases at the *l*th transport layer, the Doppler domain basis with the sequence number d corresponds to the Doppler domain basis with the sequence number $n_{4,l}^{(d)}$ in the Doppler domain bases $N_4$.

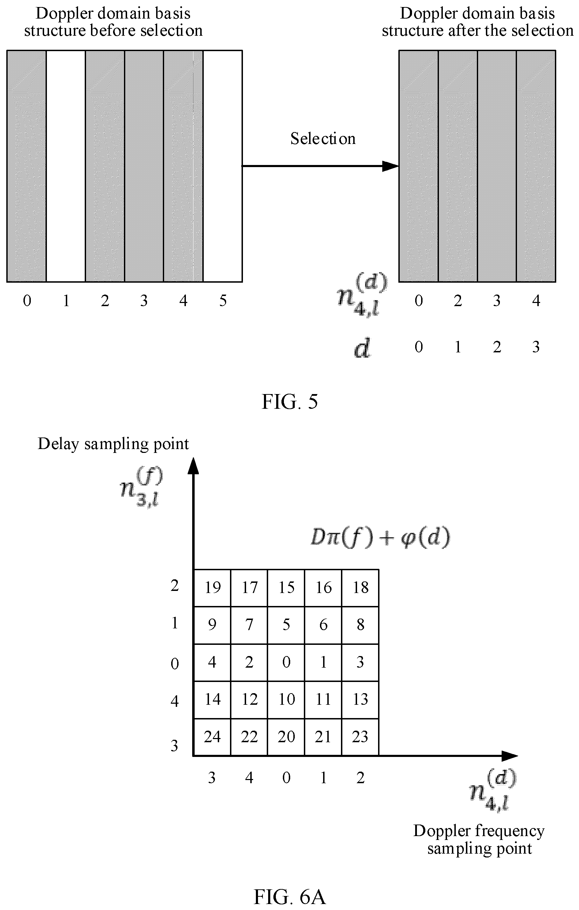

In embodiments of this application, a Doppler domain basis selection process and a frequency domain basis selection process are described below with reference to FIG. 5 by using a Doppler domain basis selection process as an example. On a left side of FIG. 5, there are six Doppler domain bases, and sequence numbers $n_{4,l}^{(d)}$ of the six Doppler domain bases are respectively 0, 1, 2, 3, 4, and 5. The Doppler domain basis 0, the Doppler domain basis 2, the Doppler domain basis 3, and the Doppler domain basis 4 may be selected, through basis selection, as Doppler domain bases used for calculating Pri(*l, i, f, d*). It should be noted that sequence numbers *d* of the four Doppler domain bases selected by the terminal device are 0, 1, 2, and 3, and sequence numbers $n_{4,l}^{(d)}$ of the four Doppler domain bases in the original six Doppler domain bases are 0, 2, 3, and 4. In this way, a quantity of Doppler domain bases used for calculating Pri(*l,i,f,d*) can be reduced, so that a calculation amount of the terminal device is reduced.

In embodiments of this application, at least one of the frequency domain basis sequence number and the Doppler domain basis sequence number may be a remapped sequence number.

In embodiments of this application, through remapping, a position of the strongest coefficient may be moved to a position at which the frequency domain basis sequence number is 0 and/or the Doppler domain basis sequence number is 0. In this way, for the strongest coefficient, the terminal device does not need to report the frequency domain basis sequence number and/or the Doppler domain basis sequence number that correspond/corresponds to the strongest coefficient, so that an amount of reported information can be reduced.

For example, the frequency domain basis sequence number $n_{3,l}^{(f)}$ is remapped by using $n_{3,l}^{(f)} = \left( n_{3,l}^{(f)} - n_{3,l}^{(f_l^*)} \right) \mod N_3$, so that a remapped frequency domain basis sequence number corresponding to the strongest coefficient is $n_{3,l}^{(f_l^*)} = 0$, where $n_{3,l}^{(f)}$ represents a sequence number of the $N_3$ frequency domain bases, and $n_{3,l}^{(f_l^*)}$ represents the remapped frequency domain basis sequence number corresponding to the strongest coefficient in the $N_3$ frequency domain bases.

For example, *f* is remapped by using $f = (f - f_l^*) \mod M$, so that a remapped frequency domain basis sequence number corresponding to the strongest coefficient is $f_l^* = 0$, where *f* represents a sequence number of the *M* frequency domain bases selected from the $N_3$ frequency domain bases, and $f_l^*$ represents the remapped frequency domain basis sequence number corresponding to the strongest coefficient in the *M* frequency domain bases.

For example, the Doppler domain basis sequence number $n_{4,l}^{(d)}$ is remapped by using $n_{4,l}^{(d)} = \left( n_{4,l}^{(d)} - n_{4,l}^{(d_l^*)} \right) \mod N_4$, and $n_{4,l}^{(d_l^*)} = 0$ after the remapping, where $n_{4,l}^{(d)}$ represents a sequence number of the $N_4$ Doppler domain bases, and $n_{4,l}^{(d_l^*)}$ represents a remapped Doppler domain basis sequence number corresponding to the strongest coefficient in the $N_4$ Doppler domain bases.

For example, d is remapped by using $d = (d - d_l^*) \mod Q$, so that a remapped Doppler domain basis sequence number corresponding to the strongest coefficient is $d_l^* = 0$, where d represents a sequence number of the *Q* frequency domain bases selected from the $N_4$ Doppler domain bases, and $d_l^*$ represents the remapped Doppler domain basis sequence number corresponding to the strongest coefficient in the *Q* Doppler domain bases.

It should be noted that, for *l* = 1, ... , v, it is assumed that $i_l^* \in \{0, 1, ..., K-1\}$, $f_l^* \in \{0, 1, ..., M-1\}$, and $d_l^* \in \{0, 1, ..., Q-1\}$ are respectively a CSI-RS port sequence number, a frequency domain basis sequence number, and a Doppler domain basis sequence number that correspond to the strongest coefficient at the *l*th transport layer, in other words, $C_{l,i_l^*,f_l^*,d_l^*}$ is the strongest coefficient at the *l*th transport layer.

In embodiments of this application, the terminal device may indicate, to the network device, the CSI-RS port sequence number corresponding to the strongest coefficient at the *l*th transport layer.

In embodiments of this application, the terminal device may notify, by using assistance information, the network device of the CSI-RS port sequence number corresponding to the strongest coefficient. In this way, when decoding the PMI, the network device may restore a coefficient corresponding to the corresponding CSI-RS port sequence number to the strongest coefficient.

For ease of description, in the following embodiments, an example in which a smaller value of the priority indication Pri(*l,i,f,d*) indicates a higher priority of the coefficient $C_{l,i,f,d}$ is used for description.

In embodiments of this application, the foregoing described Pri(*l, i, f,d*) may be obtained by using a plurality of possible relations. These relations may be classified into two types. One type is that d is remapped, and the other type is that *d* is not remapped. The following separately describes the two types of relations. It should be noted that, that *d* is remapped means that a position of a Doppler domain basis is moved through phase rotation, and that *f* is remapped means that a position of a frequency domain basis is moved through phase rotation. A remapped frequency domain basis is a frequency domain basis obtained by offsetting one frequency domain DFT vector, and a remapped Doppler domain basis is a Doppler domain basis obtained by offsetting one time domain DFT vector.

It should be noted that seven relation for determining Pri(*l, i, f,d*) are mentioned below, and in each of the seven relation, Pri(*l, i, f,d*) may be obtained when each of *l,i,f,d* is set to different values. Actually, a focus of embodiments of this application is not to determine a specific value of Pri(*l, i, f, d*), but to learn, by determining the value of Pri(*l,i,f,d*), of a priority relationship between coefficients $C_{l,i,f,d}$ corresponding to different Pri(*l,i, f, d*).

First type: *d* is remapped.

In embodiments of this application, *d* and/or *f* are/is remapped in frequency domain and/or Doppler domain, so that the frequency domain basis sequence number and/or the Doppler domain basis sequence number that correspond/-corresponds to the strongest coefficient may be 0, without affecting a precoding effect. In this way, the terminal device does not need to report the frequency domain basis sequence number and/or the Doppler domain basis sequence number that correspond/corresponds to the strongest coefficient, so that reporting overheads can be reduced.

First subtype: *f* is remapped, in other words, both *d* and *f* are remapped. In the first subtype, Pri(*l,i,f,d*) may be obtained by using the following first relation, second relation, or third relation:

1.1. *Pri(l,i,f,d)* is obtained by using the first relation, and the first relation is:

$$\mathrm{Pri}(l, i, f, d) = KvD\pi(f) + Kv\varphi(d) + vi + l,$$

where $\psi(d)$ indicates that d is remapped, $\pi(f)$ indicates that *f* is remapped, *D* is a positive integer, and $D > \varphi(d)$. It should be noted that a function of the parameter D is to increase the coefficient of $\pi(f)$, so as to increase impact of $\pi(f)$ on Pri(*l,i, f,d*) when the value of Pri(*l,i, f,d*) is determined. A value of *D* may be $N_4$, and a value range of $\varphi(d)$ may be 0, 1, ..., $N_4$ - 1.

In this application, that *d* is remapped may be represented in two manners. One representation manner is $\varphi(d)$, indicating that Doppler domain basis sequence numbers of all transport layers may be of a same value, and the other representation manner is $\varphi_l(d)$, indicating that Doppler domain basis sequence numbers of different transport layers may be of different values. Similarly, that *f* is remapped may also be represented in two manners. One representation manner is $\pi(f)$, indicating that frequency domain basis sequence numbers of all the transport layers may be of a same value, and the other manner is $\pi_l(f)$, indicating that frequency domain basis sequence numbers of the different transport layers may be of different values.

Values of coefficients 1, *v, Kv,* and *KvD* before four parameters *l, i, $\varphi(d)$,* and *$\pi(f)$* from right to left on a right side of the equal sign in the first relation are in ascending order. This may indicate that influence of the four parameters *l, i, $\varphi(d)$,* and *$\pi(f)$* on the value of the priority indication is in ascending order. A relationship between *d* and *f* and importance of the coefficient in the first information may be determined in advance through predefined remapping. Therefore, *d* and *f* have large influence on the priority indication.

In embodiments of this application, in the first relation, *d* is remapped in Doppler domain, so that the Doppler domain basis sequence number corresponding to the strongest coefficient may be 0, and *f* is remapped in frequency domain, so that the frequency domain basis sequence number corresponding to the strongest coefficient may be 0. In the first relation, the coefficient *Kv* of $\psi(d)$ is less than the coefficient *KvD* of $\pi(f)$, indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

In a possible embodiment, the terminal device may first set *f,* d, and *i* to fixed values as indicated by the first relation, to first calculate Pri(*l, i, f,d*) for each transport layer. For example, *f,* d, and *i* are all set to 0. If there are two transport layers, values of *l* are 0 and 1. In this case, Pri(*l,i,f,d*)=0 corresponding to *l*=0 is first calculated, and then Pri(*l,i,f,d*)=1 corresponding to *l*=1 is calculated.

Then, *f* and *d* are set to fixed values, and Pri(*l,i,f,d*) for each CSI-RS port is calculated. For example, when *i*=0, after Pri(*l,i,f,d*) when *l*=0 and Pri(*l,i,f,d*) when *l*=1 are obtained, *f* and *d* may continue to be set to 0; or when i=1, Pri(*l,i,f,d*) corresponding to *l*=0 and Pri(*l,i,f,d*) corresponding to *l*=1 are calculated. If the CSI-RS port has four layers, Pri(*l,i,f,d*) for each transport layer when *i*=2 and i=3 may continue to be calculated according to this method.

Then, *f* is set to a fixed value, and Pri(*l,i,f,d*) for each Doppler domain basis is calculated. For example, if *f* continues to be set to 0, when *d*=1, Pri(*l,i,f,d*) when *l*=0 and 1, and *i*=0, 1, 2, and 3 is calculated, and then when *d*=2, Pri(*l, i,f,d*) when *l* = 0,1 and *i* = 0, 1, 2, 3 is calculated. By analogy, if the Doppler domain basis has four layers, for a calculation process of Pri(*l,i,f,d*) when *d*=3, refer to the calculation process when *d*=1 for understanding.

Finally, Pri(*l,i,f,d*) for each frequency domain basis is calculated. Pri(*l,i, f,d*) corresponding to *f*=0 is obtained in the foregoing process. Then, Pri(*l,i,f,d*) corresponding to *f*=1 is calculated. For a calculation process, refer to the calculation process when *d* is a variable for understanding. Details are not described herein again.

It should be understood that the foregoing descriptions of the process in which the terminal device calculates the priority based on the first relation is merely an example. A process of calculating the priority corresponding to the first relation is not specifically limited in this application.

In embodiments of this application, for a value of $D\pi(f) + \psi(d)$ in the first relation, refer to FIG. 6A for understanding. In FIG. 6A, a horizontal coordinate is $n_{4,l}^{(d)}$, and a vertical coordinate is $n_{3,l}^{(f)}$. For $n_{4,l}^{(d)}$ and $n_{3,l}^{(f)}$, refer to the foregoing descriptions for understanding. Details are not described herein again. In a possible embodiment,

$$\varphi(d) = \min(2 \cdot n_{4,l}^{(d)}, 2 \cdot (N_4 - n_{4,l}^{(d)}) - 1), \quad \pi(f) = \min(2 \cdot n_{3,l}^{(f)}, 2 \cdot (N_3 - n_{3,l}^{(f)}) - 1)$$ $N_3 = 5$, and $N_4 = 5$. It should

be noted that, the expressions of $\varphi$(d) and $\pi$(f) and the values of $N_3$ and $N_4$ are merely examples, the values of $N_3$ and $N_4$ may alternatively be other values, and $\varphi$(d) and $\pi$(f) may alternatively be other expressions. For example,

$$\varphi(d) = \min\left(2 \cdot n_{4,l}^{(d)} + 1, 2 \cdot (N_4 - n_{4,l}^{(d)})\right) \text{ and } \pi(f) = \min\left(2 \cdot n_{3,l}^{(f)} + 1, 2 \cdot (N_3 - n_{3,l}^{(f)})\right).$$

In FIG. 6A, a horizontal coordinate may alternatively represent a position of a Doppler frequency sampling point. On a horizontal axis, 0 represents a sequence number of a 1st Doppler frequency sampling point, which may also be referred to as a 0 Doppler frequency sampling point, 1 represents a sequence number of a 2nd Doppler frequency sampling point, 2 represents a sequence number of a 3rd Doppler frequency sampling point, 3 represents a sequence number of a 4th Doppler frequency sampling point, and 4 represents a sequence number of a 5th Doppler frequency sampling point. Due to periodicity of a Doppler frequency spectrum, a distance between the Doppler frequency sampling point whose sequence number is 4 and the 0 Doppler frequency sampling point is the same as a distance between the Doppler frequency sampling point whose sequence number is 1 and the 0 Doppler frequency sampling point. In FIG. 6A, for ease of description, the Doppler frequency sampling point whose sequence number is 4 and the Doppler frequency sampling point whose sequence number is 1 are placed at symmetric positions on two sides of the 0 Doppler frequency sampling point. Similarly, the Doppler frequency sampling point whose sequence number is 2 and the Doppler frequency sampling point whose sequence number is 3 are also located at symmetric positions on the two sides of the 0 Doppler frequency sampling point.

In FIG. 6A, a vertical coordinate may alternatively represent a delay sampling point of a frequency domain basis. On a vertical axis, 0 represents a sequence number of a 1st delay sampling point, which may also be referred to as a 0 delay sampling point, 1 represents a sequence number of a 2nd delay sampling point, 2 represents a sequence number of a 3rd delay sampling point, and 4 represents a sequence number of a 5th delay sampling point. Due to periodicity of a frequency domain spectrum, a distance between the delay sampling point whose sequence number is 4 and the 0 delay sampling point is the same as a distance between the delay sampling point whose sequence number is 1 and the 0 delay sampling point. In FIG. 6A, for ease of description, the delay sampling point whose sequence number is 4 and the delay sampling point whose sequence number is 1 are placed at symmetric positions on two sides of the 0 delay sampling point. Similarly, the delay sampling point whose sequence number is 2 and the delay sampling point whose sequence number is 3 are also located at symmetric positions on the two sides of the 0 delay sampling point.

In FIG. 6A, values from 0 to 24 at cross positions of the Doppler frequency sampling points and the delay sampling points represent values of $D\pi(f) + \varphi(d)$. It can be learned from FIG. 6A that, $D\pi(f) + \psi(d)$ corresponding to the 0 Doppler frequency sampling point is less than $D\pi(f) + \varphi(d)$ corresponding to another Doppler frequency sampling point for a same delay sampling point. At a same delay sampling point, $D\pi(f) + \psi(d)$ corresponding to a Doppler frequency sampling point that is close to the 0 Doppler frequency sampling point is less than $D\pi(f) + \varphi(d)$ corresponding to a Doppler frequency sampling point that is far away from the 0 Doppler frequency sampling point. For example, at the delay sampling point 0, the Doppler frequency sampling point whose sequence number is 1 corresponds to $D\pi(f) + \varphi(d)=1,$ and the Doppler frequency sampling point whose sequence number is 2 corresponds to $D\pi(f) + \varphi(d)=3.$

Similarly, at a same Doppler frequency sampling point, $D\pi(f) + \varphi(d)$ corresponding to a delay sampling point that is close to the 0 delay sampling point is less than $D\pi(f) + \varphi(d)$ corresponding to a delay sampling point that is far away from the 0 delay sampling point. For example, at the 0 Doppler frequency sampling point, the delay sampling point whose sequence number is 1 corresponds to $D\pi(f) + \varphi(d)=5,$ and the delay sampling point whose sequence number is 2 corresponds to $D\pi(f) + \varphi(d)=15.$

It can be learned from FIG. 6A that, Pri(l, i, f, d) corresponding to $D\pi(f) + \varphi(d)$ of the 0 Doppler frequency sampling point may be preferentially calculated, and then Pri(l,i,f,d) corresponding to $D\pi(f) + \varphi(d)$ of Doppler frequency sampling points that are on the two sides of the 0 Doppler frequency sampling point and that are close to the 0 Doppler frequency sampling point is calculated.

Content shown in FIG. 6A may also be described as that a smaller value of $\min(n_{4,l}^{(d)}, N_4 - n_{4,l}^{(d)})$ indicates a smaller value of $\varphi(d),$ where $n_{4,l}^{(d)}$ represents a position of a Doppler frequency sampling point corresponding to the dth Doppler domain basis at the lth layer of the precoding matrix, $N_4$ represents a total quantity of Doppler frequency sampling points, and $\min(n_{4,l}^{(d)}, N_4 - n_{4,l}^{(d)})$, represents a distance between the position of the Doppler frequency sampling point corresponding to the $d^{th}$ Doppler domain basis and a position of the 0 Doppler frequency sampling point.

Optionally, when the value of $D$ is $N_4$, it indicates that the total quantity of Doppler frequency sampling points is $N_4$.

1.2. *Pri(l,i,f,d)* is obtained by using the second relation, and the second relation is:

$$\mathrm{Pri}(l, i, f, d) = KvF\varphi(d) + Kv\pi(f) + vi + l,$$

where $\pi(f)$ indicates that $f$ is remapped, $\varphi(d)$ indicates that $d$ is remapped, $F$ is a positive integer, and $F > \pi(f)$. It should be noted that a function of the parameter F is to increase the coefficient of $\varphi(d)$, so as to increase influence of $\varphi(d)$ on Pri(l,i,f,d) when the value of Pri(l, i,f,d) is determined. A value of $F$ may be $N_3$, and a value range of $\pi(f)$ may be 0, 1, ..., $N_3$-1.

Values of coefficients 1, $v$, $Kv$, and $KvF$ before four parameters $l,i,\pi(f)$, and $\varphi(d)$ from right to left on a right side of the equal sign in the second relation are in ascending order. This may indicate that influence of the four parameters $l, i, \pi(f),$ and $\varphi(d)$ on the value of the priority indication is in ascending order. A relationship between $d$ and $f$ and importance of the coefficient in the first information may be determined in advance through predefined remapping. Therefore, $d$ and $f$ have large influence on the priority indication.

In embodiments of this application, in the second relation, $d$ is remapped in Doppler domain, so that the Doppler domain basis sequence number corresponding to the strongest coefficient may be 0, and $f$ is remapped in frequency domain, so that the frequency domain basis sequence number corresponding to the strongest coefficient may be 0. In the second relation, the coefficient $Kv$ of $\pi(f)$ is less than the coefficient $KvF$ of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

In a possible embodiment, the terminal device may first set $d$, $f$, and $i$ to fixed values as indicated by the second relation, to first calculate Pri(l,i, f, d) for each transport layer. For example, $d$, $f$, and $i$ are all set to 0. If there are two transport layers, values of $l$ are 0 and 1. In this case, Pri(l,i,f,d)=0 corresponding to $l$=0 is first calculated, and then Pri(l,i,f,d)=1 corresponding to $l$=1 is calculated.

Then, $d$ and $f$ are set to fixed values, and Pri(l,i,f,d) for each CSI-RS port is calculated. For example, when $i$=0, after *Pri(l,i,f,d)* when $l$=0 and Pri(l,i,f,d) when $l$=1 are obtained, d and $f$ may continue to be set to 0; or when i=1, Pri(l,i,f,d) corresponding to $l$=0 and Pri(l,i,f,d) corresponding to $l$=1 are calculated. If the CSI-RS port has four layers, Pri(l,i,f,d) for each transport layer when $i$=2 and i=3 may continue to be calculated according to this method.

Then, d is set to a fixed value, and Pri(l,i,f,d) for each frequency domain basis is calculated. For example, if d continues to be set to 0, when $f$=1, Pri(l,i,f,d) when $l$=0,1,$i$=0,1,2,3 is calculated, and then when $f$=2, Pri(l, i, f, d) when $l$= 0, 1 and $i$ = 0, 1, 2, 3 is calculated. By analogy, if the frequency domain basis has four layers, for a calculation process of Pri(l, i,f,d) when $f$ =3, refer to the calculation process when $\pi(f)$=1 for understanding.

Finally, Pri(l,i,f,d) for the Doppler domain basis is calculated. *Pri(l,i,f,d)* corresponding to d=0 is obtained in the foregoing process. Then, Pri(l,i,f,d) corresponding to $d$=1 is calculated. For a calculation process, refer to the calculation process when $f$ is a variable for understanding. Details are not described herein again.

It should be understood that the foregoing descriptions of the process in which the terminal device calculates the priority based on the second relation is merely an example. A process of calculating the priority corresponding to the second relation is not specifically limited in this application.

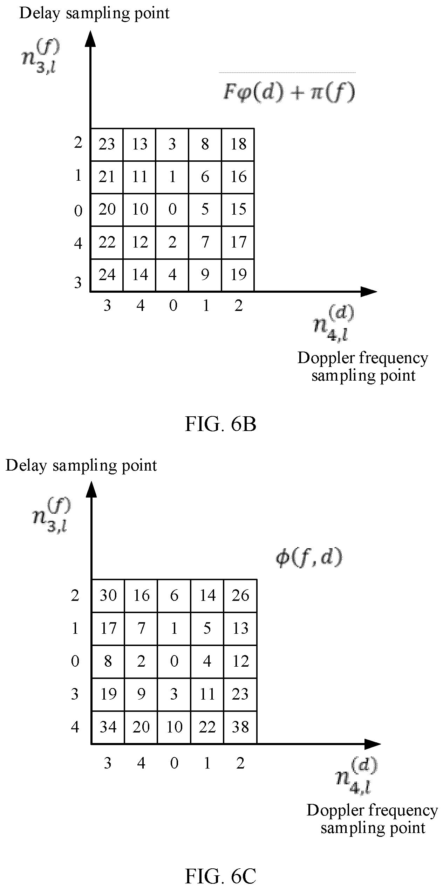

In embodiments of this application, for a value of $F\varphi(d) + \pi(f)$ in the second relation, refer to FIG. 6B for understanding. In FIG. 6B, a horizontal coordinate is $n_{4,l}^{(d)}$, and a vertical coordinate is $n_{3,l}^{(f)}$. For $n_{4,l}^{(d)}$ and $n_{3,l}^{(f)}$, refer to the foregoing descriptions for understanding. Details are not described herein again. In a possible embodiment, alternatively, $\varphi(d) = \min(2 \cdot n_{4,l}^{(d)}, 2 \cdot (N_4 - n_{4,l}^{(d)}) - 1)$, $\pi(f) = \min(2 \cdot n_{3,l}^{(f)}, 2 \cdot (N_3 - n_{3,l}^{(f)}) - 1)$, $N_3$=5, and $N_4$ = 5. It should be noted that the values of $N_3$ and $N_4$ are merely examples, the values of $N_3$ and $N_4$ may alternatively be other values, and $\varphi$(d) and $\pi(f)$ may alternatively be other expressions.

For meanings of the horizontal coordinate and the vertical coordinate in FIG. 6B, refer to the descriptions of FIG. 6A for understanding. In FIG. 6B, values from 0 to 24 at cross positions of delay sampling points and Doppler frequency sampling points represent values of $F\varphi(d) + \pi(f)$. It can be learned from FIG. 6B that, $F\varphi(d) + \pi(f)$ corresponding to a 0 delay sampling point is less than $F\varphi(d) + \pi(f)$ corresponding to another delay sampling point for a same Doppler frequency sampling point. At a same Doppler frequency sampling point, $F\varphi(d) + \pi(f)$ corresponding to a delay sampling point that is close to the 0 delay sampling point is less than $F\varphi(d) + \pi(f)$ corresponding to a delay sampling point that is far away from the 0 delay sampling point. For example, at a 0 Doppler frequency sampling point, a delay sampling point whose sequence number is 1 corresponds to $F\varphi(d) + \pi(f)$=1, and a delay sampling point whose sequence number is 2 corresponds to $F\varphi(d) + \pi(f)$=3.

Similarly, at a same delay sampling point, $F\varphi(d) + \pi(f)$ corresponding to a Doppler frequency sampling point that is close to the 0 Doppler frequency sampling point is less than $F\varphi(d) + \pi(f)$ corresponding to a Doppler frequency sampling point that is far away from the 0 Doppler frequency sampling point. For example, at the delay sampling point 0, a Doppler frequency sampling point whose sequence number is 1 corresponds to $F\varphi(d) + \pi(f) = 5$, and a Doppler frequency sampling point whose sequence number is 2 corresponds to $F\varphi(d) + \pi(f) = 15$.

Content shown in FIG. 6B may also be described as that a smaller value of $\min(n_{3,l}^{(f)}, N_3 - n_{3,l}^{(f)})$ indicates a smaller value of $\pi(f)$, where $n_{3,l}^{(f)}$ represents a position of a delay sampling point corresponding to the $f$th frequency domain basis at the $l$th layer of the precoding matrix, $N_3$ represents a total quantity of delay sampling points, and $\min(n_{3,l}^{(f)}, N_3 - n_{3,l}^{(f)})$ represents a distance between the position of the delay sampling point corresponding to the $f$th frequency domain basis and a position of the 0 delay sampling point.

1.3. *Pri(l,i,f,d)* is obtained by using the third relation, and the third relation is:

$$\mathrm{Pri}(l, i, f, d) = Kv\phi(f, d) + vi + l,$$

where $\phi$(f,d) indicates that both *f* and d are remapped.

In this application, that *f* and *d* are remapped may be represented in two manners. One manner is $\phi(f,d)$, indicating that frequency domain basis sequence numbers and Doppler domain basis sequence numbers of all the transport layers may be of a same value, and the other representation manner is $\phi_l(f,d)$, indicating that frequency domain basis sequence numbers and Doppler domain basis sequence numbers of different transport layers may be of different values. A value range of $\phi(f,d)$ may be 0, 1, ..., *D*M*-1.

Values of coefficients 1, *v,* and *Kv* before three parameters *l, i,* and *$\phi$(f,d)* from right to left on a right side of the equal sign in the third relation are in ascending order. This may indicate that influence of the three parameters *l, i,* and *$\phi$(f,d)* on the value of the priority indication is in ascending order. A relationship between d and *f* and importance of the coefficient in the first information may be determined in advance through predefined remapping. Therefore, *d* and *f* have large influence on the priority indication.

In embodiments of this application, in the third relation, *d* is remapped in Doppler domain, so that the Doppler domain basis sequence number corresponding to the strongest coefficient may be 0, and *f* is remapped in frequency domain, so that the frequency domain basis sequence number corresponding to the strongest coefficient may be 0. The third relation indicates that when both the Doppler domain basis and the frequency domain basis are used for determining Pri(*l, i, f, d),* coefficients $C_{l,i,f,d}$ of the Doppler domain basis whose sequence number is 0 and the frequency domain basis whose sequence number is 0 and coefficients $C_{l,i,f,d}$ of a Doppler domain basis and a frequency domain basis whose sum of distances to the Doppler domain basis whose sequence number is 0 and the frequency domain basis whose sequence number is 0 is smaller are more important, and are preferentially reported.

It should be understood that the foregoing descriptions of the process in which the terminal device calculates the priority based on the third relation are merely an example. A process of calculating the priority corresponding to the third relation is not specifically limited in this application.

In embodiments of this application, for a value of *$\phi$(f,d)* in the third relation, refer to FIG. 6C for understanding. In FIG. 6C, a horizontal coordinate is $n_{4,l}^{(d)}$, and a vertical coordinate is $n_{3,l}^{(f)}$. For $n_{4,l}^{(d)}$, and refer to the foregoing descriptions for understanding. Details are not described herein again. $\phi(f,d) = \min((\phi_1(f,d), \phi_2(f,d), \phi_3(f,d), \phi_4(f,d))$, where

$$\phi_1(f, d) = 2\big(n_{3,l}^{(f)} + n_{4,l}^{(d)}\big)\big(n_{3,l}^{(f)} + n_{4,l}^{(d)} + 1\big) - n_{4,l}^{(d)},$$

$$\phi_2(f, d) = 2\big(N_3 - n_{3,l}^{(f)} + n_{4,l}^{(d)}\big)\big(N_3 - n_{3,l}^{(f)} + n_{4,l}^{(d)} + 1\big) - 2N_3 + 2n_{3,l}^{(f)} - n_{4,l}^{(d)},$$

and

$$\phi_3(f, d) = 2\big(n_{3,l}^{(f)} + N_4 - n_{4,l}^{(d)}\big)\big(n_{3,l}^{(f)} + N_4 - n_{4,l}^{(d)} + 1\big) - 4n_{3,l}^{(f)} - 3N_4 + 3n_{4,l}^{(d)}.$$

$$\phi_4(f, d) = 2\big(N_3 - n_{3,l}^{(f)} + N_4 - n_{4,l}^{(d)}\big)\big(N_3 - n_{3,l}^{(f)} + N_4 - n_{4,l}^{(d)} + 1\big) - 2N_3 + 2n_{3,l}^{(f)} - 3N_4 + 3n_{4,l}^{(d)},$$

$N_3 = 5$, and $N_4 = 5$. It should be noted that the expression of *$\phi$(f,d)* and the values of $N_3$ and $N_4$ are merely examples.

In FIG. 6C, 25 values at cross positions of Doppler frequency sampling points and delay sampling points represent *$\phi$(f,d)*. It can be learned from FIG. 6C that, a 0 Doppler frequency sampling point and a 0 delay sampling point

correspond to $\phi(f,d)=0$, and corresponding $\phi(f,d)$ when a sum of a first distance and a second distance is smaller is less than corresponding $\phi(f,d)$ when the sum the first distance and the second distance is larger. The first distance is a distance between a position of a delay sampling point corresponding to the $f^{th}$ frequency domain basis and a position of the 0 delay sampling point, and the second distance is a distance between a position of a Doppler frequency sampling point corresponding to the $d^{th}$ Doppler domain basis and a position of the 0 Doppler frequency sampling point. A smaller value of $\phi(f,d)$ is distributed around $\phi(f,d)=0$.

Content shown in FIG. 6C may also be described as that a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi(f,d)$, where $n_{3,l}^{(f)}$ represents a position of a delay sampling point corresponding to the $f^{th}$ frequency domain basis at the $l^{th}$ layer of the precoding matrix, $N_3$ represents a total quantity of delay sampling points, $n_{4,l}^{(d)}$ represents a position of a Doppler frequency sampling point corresponding to the $d^{th}$ Doppler domain basis at the $l^{th}$ layer of the precoding matrix, $N_4$ represents a total quantity of Doppler frequency sampling points, and $(\min(n_{3,l}^{(f)}, N_3 - n_{3,l}^{(f)}) + \min(n_{4,l}^{(d)}, N_4 - n_{4,l}^{(d)}))$ represents the sum of the first distance and the second distance.

For $\min(n_{3,l}^{(f)}, N_3 - n_{3,l}^{(f)})$ and $\min(n_{4,l}^{(d)}, N_4 - n_{4,l}^{(d)})$, refer to the foregoing descriptions for understanding.

Second subtype: $f$ is not remapped, in other words, only $d$ is remapped. In the second subtype, Pri($l,i,f,d$) may be obtained by using the following fourth relation:

2.1. *Pri(l,i,f,d)* is obtained by using the fourth relation, and the fourth relation is:

$$\mathrm{Pri}(l, i, f, d) = KvM\varphi(d) + Kvf + vi + l,$$

where $\psi(d)$ indicates that $d$ is remapped.

For meanings in the fourth relation, basically refer to the descriptions in the first relation for understanding. A difference is that $f$ is not remapped in the fourth relation. In this way, during calculation of Pri($l,i,f,d$), only $\pi(f)$ in the first relation needs to be replaced with $f$. For another specific process, refer to the foregoing descriptions of the first relation for understanding. Details are not described herein again.

In embodiments of this application, in the fourth relation, $d$ is remapped in Doppler domain, so that the Doppler domain basis sequence number corresponding to the strongest coefficient may be 0, and the coefficient $Kv$ of $f$ is less than the coefficient $KvM$ of $\varphi(d)$, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

It should be understood that the foregoing descriptions of the process in which the terminal device calculates the priority based on the fourth relation is merely an example. A process of calculating the priority corresponding to the fourth relation is not specifically limited in this application.

Second type: $d$ is not remapped.

Similar to the classification of the first type, the second type is classified into a third subtype and a fourth subtype.

Third subtype: $f$ is not remapped, in other words, $d$ and $f$ are not remapped. In the third subtype, Pri($l,i,f,d$) may be obtained by using the following fifth relation:

3.1. *Pri(l,i,f,d)* is obtained by using the fifth relation, and the fifth relation is:

$$\mathrm{Pri}(l, i, f, d) = KvMd + Kvf + vi + l.$$

For the fifth relation, refer to the descriptions in the first relation for understanding. A difference is that $d$ and $f$ are not remapped in the fifth relation. In this way, during calculation of Pri($l,i,f,d$), in the first relation, only $\pi(f)$ needs to be replaced with $f$ and $\varphi(d)$ needs to be replaced with $d$. For another specific process, refer to the foregoing descriptions of the first relation for understanding. Details are not described herein again.

In embodiments of this application, in the fifth relation, the coefficient $Kv$ of $f$ is less than the coefficient $KvM$ of d, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

It should be understood that the foregoing descriptions of the process in which the terminal device calculates the priority based on the fifth relation is merely an example. A process of calculating the priority corresponding to the fifth relation is not specifically limited in this application.

Fourth subtype: $f$ is remapped, in other words, only $f$ is remapped. In the fourth subtype, Pri($l,i,f,d$) may be obtained by using the following sixth relation or seventh relation:

4.1. *Pri(l,i,f,d)* is obtained by using the sixth relation, and the sixth relation is:

$$\mathrm{Pri}(l, i, f, d) = KvD\pi(f) + Kvd + vi + l,$$

where $\pi$(f) indicates that *f* is remapped.

For the sixth relation, refer to the first relation for understanding. A difference is that d is not remapped in the sixth relation. In this way, during calculation of Pri(*l,i,f,d*), only $\psi(d)$ in the first relation needs to be replaced with d. For another specific process, refer to the foregoing descriptions of the first relation for understanding. Details are not described herein again.

In embodiments of this application, in the sixth relation, *f* is remapped in frequency domain, so that the frequency domain basis sequence number corresponding to the strongest coefficient may be 0. In the sixth relation, the coefficient *Kv* of d is less than the coefficient *KvD* of $\pi(f)$, indicating that when a sequence number of a frequency domain basis is fixed, a coefficient $C_{l,i,f,d}$ of a Doppler domain basis whose sequence number is 0 and a coefficient $C_{l,i,f,d}$ of a Doppler domain basis that is closer to the Doppler domain basis whose sequence number is 0 are more important, and are preferentially reported.

It should be understood that the foregoing descriptions of the process in which the terminal device calculates the priority based on the sixth relation is merely an example. A process of calculating the priority corresponding to the sixth relation is not specifically limited in this application.

4.2. *Pri(l,i,f,d)* is obtained by using the seventh relation, and the seventh relation is:

$$\mathrm{Pri}(l, i, f, d) = KvFd + Kv\pi(f) + vi + l,$$

where $\pi(f)$ indicates that *f* is remapped.

For the seventh relation, refer to the second relation for understanding. A difference is that *d* is not remapped in the seventh relation. In this way, during calculation of Pri(*l,i,f,d*), only $\psi(d)$ in the second relation needs to be replaced with d. For another specific process, refer to the foregoing descriptions of the second relation for understanding. Details are not described herein again.

In embodiments of this application, in the seventh relation, *f* is remapped in frequency domain, so that the frequency domain basis sequence number corresponding to the strongest coefficient may be 0. In the seventh relation, the coefficient *Kv* of $\pi(f)$ is less than the coefficient *KvD* of d, indicating that when a sequence number of a Doppler domain basis is fixed, a coefficient $C_{l,i,f,d}$ of a frequency domain basis whose sequence number is 0 and a coefficient $C_{l,i,f,d}$ of a frequency domain basis that is closer to the frequency domain basis whose sequence number is 0 are more important, and are preferentially reported.

It should be understood that the foregoing descriptions of the process in which the terminal device calculates the priority based on the seventh relation is merely an example. A process of calculating the priority corresponding to the seventh relation is not specifically limited in this application.

In the foregoing technical solutions, in a multi-site coordination scenario, each site may obtain a precoding matrix of the site, to enable a plurality of network devices to perform multi-site coordination transmission.

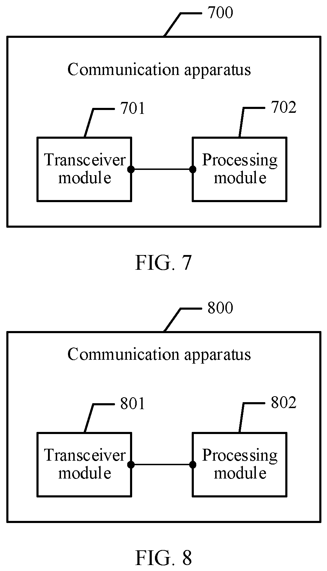

This application further provides a communication apparatus. FIG. 7 is a diagram of a structure of the communication apparatus according to an embodiment of this application. The communication apparatus 700 may be configured to perform the steps performed by the terminal device in the embodiment shown in FIG. 4. For details, refer to related descriptions in the foregoing method embodiment.

The communication apparatus 700 includes a transceiver module 701 and a processing module 702.

The processing module 702 is configured to determine first information, where the first information indicates a precoding matrix, and the first information includes a part or all of a plurality of coefficients $C_{l,i,f,d}$, where *l* = 1, 2, ... , *v* is a transport layer sequence number, *i = 0, 1, ..., K* - 1 is a CSI-RS port sequence number or a spatial domain basis sequence number, *f* = 0, 1, ... , M - 1 is a frequency domain basis sequence number, *d* = 0,1, ..., Q - 1 is a Doppler domain basis sequence number, *v* represents a quantity of transport layers, K represents a quantity of CSI-RS ports or a quantity of spatial domain bases, M represents a quantity of frequency domain bases, and Q represents a quantity of Doppler domain bases, where v, K, M, and Q are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and the coefficient $C_{l,i,f,d}$ corresponds to a priority indication *Pri(l,i,f,d)*, and the coefficients $C_{l,i,f,d}$ in the first information are arranged based on Pri(*l,i, f, d*).

The transceiver module 701 is configured to send the first information to a network device.

Optionally, a smaller value of Pri(*l,i,f,d*) indicates a higher priority of the coefficient $C_{l,i,f,d}$; or a larger value of Pri(*l, i,f,d*) indicates a higher priority of the coefficient $C_{l,i,f,d}$.

Optionally, a higher priority of the coefficient $C_{l,i,f,d}$ indicates that the coefficient $C_{l,i,f,d}$ is ranked higher in a field corresponding to the first information. A lower priority of the coefficient $C_{l,i,f,d}$ indicates that the coefficient $C_{l,i,f,d}$ is more preferentially omitted when a field length of the first information is insufficient.

Optionally, when a priority of a first coefficient $C_{l,i,f,d}$ is higher than a priority of a second coefficient $C_{l,i,f,d}$, the first coefficient $C_{l,i,f,d}$ is sorted before the second coefficient $C_{l,i,f,d}$ in an information field used to carry the first information.

Optionally, when a length of the information field is limited, the first information includes the first coefficient $C_{l,i,f,d}$ but does not include the second coefficient $C_{l,i,f,d}$.

Optionally, the plurality of coefficients $C_{l,i,f,d}$ may be distributed in a first group and a second group, where a priority of the coefficient $C_{l,i,f,d}$ in the first group is higher than a priority of the coefficient $C_{l,i,f,d}$ in the second group, and the first information includes the coefficient $C_{l,i,f,d}$ in the first group.

In this embodiment of this application, the first group may include $A_1$ higher-priority coefficients $C_{l,i,f,d}$, and the second group may include $A_2$ lower-priority coefficients $C_{l,i,f,d}$. A sum of $A_1$ and $A_2$ may be equal to a total quantity of weighting coefficients, or may be less than the total quantity of weighting coefficients. When the terminal device has no sufficient grant resource to report all the weighting coefficients, the terminal device may preferentially omit the $A_2$ lower-priority coefficients $C_{l,i,f,d}$ in the second group, and preferentially report the $A_1$ higher-priority coefficients $C_{l,i,f,d}$. In this embodiment, a more important coefficient that needs to be reported is specified.

Optionally, the first information further includes a first bitmap (bitmap), a length of the first bitmap is usually $vKMQ$, and the first bitmap may include a plurality of bits $B_{l,i,f,d}$. The terminal device may indicate, by using a value of the bit $B_{l,i,f,d}$ in the first bitmap, the coefficient $C_{l,i,f,d}$ included in the first information. The first information may include a coefficient $C_{l,i,f,d}$ corresponding to a bit $B_{l,i,f,d}$ with a first value, and the coefficient $C_{l,i,f,d}$ corresponding to the bit $B_{l,i,f,d}$ with the first value is not a strongest coefficient.

In this possible embodiment, because all coefficients are obtained through normalization by using a strongest coefficient as a reference, in other words, the strongest coefficient is fixed at 1, the strongest coefficient can be learned of by the network device without being reported, and does not need to be reported. Therefore, the first information may not include the strongest coefficient corresponding to the bit $B_{l,i,f,d}$ with the first value. The value of the bit $B_{l,i,f,d}$ in the first bitmap may be the first value, or may be a second value. The first value may be 1, and the second value may be 0. Alternatively, the first value may be 0, and the second value may be 1. If $C_{l,i,f,d}$ indicated by the first value is not a strongest coefficient at the $l^{th}$ transport layer, $C_{l,i,f,d}$ is reported in the first information. $C_{l,i,f,d}$ indicated by the second value and the strongest coefficient at the $l^{th}$ transport layer that is indicated by the first value may be omitted and not reported. For example, when $C_{l,i,f,d}$ corresponding to a bit with a value of 1 in the first bitmap is not the strongest coefficient, $C_{l,i,f,d}$ is reported in the first information, and $C_{l,i,f,d}$ corresponding to a bit with a value of 2 in the first bitmap and the strongest coefficient corresponding to the bit with the value of 1 in the first bitmap may be omitted and not reported. In this embodiment, a more important coefficient that needs to be reported is specified.

Optionally, a smaller value of Pri$(l,i,f,d)$ indicates a higher priority of the bit $B_{l,i,f,d}$; or a larger value of Pri$(l,i, f, d)$ indicates a higher priority of the bit $B_{l,i,f,d}$.

Optionally, a higher priority of the bit $B_{l,i,f,d}$ indicates a higher position corresponding to the bit $B_{l,i,f,d}$ in the first bitmap, and a lower priority of the bit $B_{l,i,f,d}$ indicates that a lower position corresponding to the bit $B_{l,i,f,d}$ in the first bitmap.

Optionally, the plurality of bits $B_{l,i,f,d}$ in the first bitmap may be distributed in a third group and a fourth group, where a priority of the bit $B_{l,i,f,d}$ in the third group is higher than a priority of the bit $B_{l,i,f,d}$ in the fourth group.

In this possible embodiment, the third group may be the first group, or may be another group independent of the first group, and the fourth group may be the second group, or may be another group independent of the second group. The third group may include $A_1$ highest-priority bits $B_{l,i,f,d}$, the fourth group may include $A_2$ lowest-priority bits $B_{l,i,f,d}$, the length of the first bitmap is $vKMQ$, and the third group may alternatively include $vKMQ$-$A_2$ highest-priority bits $B_{l,i,f,d}$. When all the bits $B_{l,i,f,d}$ cannot be reported due to the limitation of the length of the UCI, the terminal device may preferentially omit the $A_2$ lowest-priority coefficients $B_{l,i,f,d}$ in the fourth group, and preferentially report the $vKMQ$-$A_2$ highest-priority coefficients $C_{l,i,f,d}$ in the third group. In this implementation, a more important bit $B_{l,i,f,d}$ that needs to be reported is specified. In this manner, both the first information and the first bitmap may be grouped by using the priority indication Pri$(l,i,f,d)$, to reduce reporting overheads as much as possible.

Optionally, the $K$ CSI-RS ports are a part or all of CSI-RS ports selected by the terminal device from P CSI-RS ports, where P is a quantity of CSI-RS ports configured by the network device or predefined in a protocol, $K \leq P$, and $K$ and $P$ are all positive integers.

Optionally, the $K$ spatial domain bases are a part or all of spatial domain bases selected by the terminal device from $P$ spatial domain bases, where $P$ is a quantity of spatial domain bases configured by the network device or predefined in a protocol, $K \leq P$, and $K$ and $P$ are all positive integers.

Optionally, the network device sends assistance information to the terminal device, so that the terminal device determines $K$.

Optionally, the M frequency domain bases are a part or all of frequency domain bases selected by the terminal device from $N_3$ frequency domain bases, where $N_3$ is determined based on a quantity of frequency-domain units configured by the network device or predefined in a protocol, M $\leq N_3$, and M and $N_3$ are all positive integers. Optionally, the network device sends assistance information to the terminal device, so that the terminal device determines $M$.

Optionally, the Q Doppler domain bases are a part or all of Doppler domain bases selected by the terminal device from $N_4$ Doppler domain bases, where $N_4$ is determined based on a quantity of time-domain units configured by the network device or predefined in a protocol, $Q \leq N_4$, and $Q$ and $N_4$ are all positive integers. Optionally, the network device sends assistance information to the terminal device, so that the terminal device determines $Q$.

Optionally, a sequence number corresponding to the M frequency domain bases selected by the terminal device from the $N_3$ frequency domain bases is represented by $n_{3,l}^{(f)}$, where $l = 1, 2, ..., v$ is the transport layer sequence number, and $f = 0, 1, ..., M - 1$; in other words, in the M frequency domain bases at the $l^{th}$ transport layer, the frequency domain basis with the sequence number $f$ corresponds to the frequency domain basis with the sequence number $n_{3,l}^{(f)}$ in the $N_3$ frequency domain bases.

Optionally, a sequence number corresponding to the Q Doppler domain bases selected by the terminal device from the $N_4$ Doppler domain bases is represented by $n_{4,l}^{(d)}$, where $l = 1, 2, ..., v$ is the transport layer sequence number, and $d = 0, 1, ..., Q - 1$; in other words, in the Q Doppler domain bases at the $l^{th}$ transport layer, the Doppler domain basis with the sequence number d corresponds to the Doppler domain basis with the sequence number $n_{4,l}^{(d)}$ in the Doppler domain bases $N_4$.

Optionally, at least one of the frequency domain basis sequence number and the Doppler domain basis sequence number may be a remapped sequence number.

For example, the frequency domain basis sequence number $n_{3,l}^{(f)}$ is remapped by using $n_{3,l}^{(f)} = \left(n_{3,l}^{(f)} - n_{3,l}^{(f_l^*)}\right) \mod N_3$, so that a remapped frequency domain basis sequence number corresponding to the strongest coefficient is $n_{3,l}^{(f_l^*)} = 0$, where $n_{3,l}^{(f)}$ represents a sequence number of the $N_3$ frequency domain bases, and $n_{3,l}^{(f_l^*)}$ represents the remapped frequency domain basis sequence number corresponding to the strongest coefficient in the $N_3$ frequency domain bases.

For example, f is remapped by using $f = (f - f_l^*) \mod M$, so that a remapped frequency domain basis sequence number corresponding to the strongest coefficient is $f_l^* = 0$, where f represents a sequence number of the M frequency domain bases selected from the $N_3$ frequency domain bases, and $f_l^*$ represents the remapped frequency domain basis sequence number corresponding to the strongest coefficient in the M frequency domain bases.

For example, the Doppler domain basis sequence number $n_{4,l}^{(d)}$ is remapped by using $n_{4,l}^{(d)} = \left(n_{4,l}^{(d)} - n_{4,l}^{(d_l^*)}\right) \mod N_4$, and $n_{4,l}^{(d_l^*)} = 0$ after the remapping, where $n_{4,l}^{(d)}$ represents a sequence number of the $N_4$ Doppler domain bases, and $n_{4,l}^{(d_l^*)}$ represents a remapped Doppler domain basis sequence number corresponding to the strongest coefficient in the $N_4$ Doppler domain bases.

For example, d is remapped by using $d = (d - d_l^*) \mod Q$, so that a remapped Doppler domain basis sequence number corresponding to the strongest coefficient is $d_l^* = 0$, where d represents a sequence number of the Q frequency domain bases selected from the $N_4$ Doppler domain bases, and $d_l^*$ represents the remapped Doppler domain basis sequence number corresponding to the strongest coefficient in the Q Doppler domain bases.

It should be noted that, for $l = 1, ..., v$, it is assumed that $i_l^* \in \{0, 1, ..., K - 1\}$, $f_l^* \in \{0, 1, ..., M - 1\}$ and $d_l^* \in \{0, 1, ..., Q - 1\}$ are respectively a CSI-RS port sequence number, a frequency domain basis sequence number, and a Doppler domain basis sequence number that correspond to the strongest coefficient at the $l^{th}$ transport layer, in other words, $C_{l,i_l^*,f_l^*,d_l^*}$ is the strongest coefficient at the $l^{th}$ transport layer.

Optionally, the terminal device indicates, to the network device, the CSI-RS port sequence number corresponding to the strongest coefficient at the $l^{th}$ transport layer.

Optionally, Pri(l,i,f,d) is obtained by using a first relation, and the first relation is:

$$\mathrm{Pri}(l, i, f, d) = KvD\pi(f) + Kv\varphi(d) + vi + l,$$

where $\varphi(d)$ indicates that d is remapped, $\pi(f)$ indicates that $f$ is remapped, $D$ is a positive integer, and $D > \varphi(d)$.

Optionally, Pri($l,i,f,d$) is obtained by using a second relation, and the second relation is:

$$\mathrm{Pri}(l,i,f,d) = KvF\varphi(d) + Kv\pi(f) + vi + l,$$

where $\pi(f)$ indicates that $f$ is remapped, $\varphi(d)$ indicates that $d$ is remapped, $F$ is a positive integer, and $F > \pi(f)$.

Optionally, Pri($l,i,f,d$) is obtained by using a third relation, and the third relation is:

$$\mathrm{Pri}(l,i,f,d) = Kv\phi(f,d) + vi + l,$$

where $\phi(f,d)$ indicates that both $f$ and d are remapped.

Optionally, a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi$ (f,d), where $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \leq N_4$, and $N_4$ is a positive integer; and $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, M $\leq N_3$, and $N_3$ is a positive integer.

Optionally, a value range of $\phi(f,d)$ is 0, 1, ..., $D*M$-1.

Optionally, Pri($l,i,f,d$) is obtained by using a fourth relation, and the fourth relation is:

$$\mathrm{Pri}(l,i,f,d) = KvM\varphi(d) + Kvf + vi + l,$$

where $\varphi(d)$ indicates that $d$ is remapped.

Optionally, a smaller value of $\min(n_{4,l}^{(d)}, N_4 - n_{4,l}^{(d)})$ indicates a smaller value of $\varphi(d)$, where $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \leq N_4$, and $N_4$ is a positive integer.

Optionally, a value of $D$ is $N_4$, and a value range of $\psi(d)$ is 0, 1, ..., $N_4$ - 1.

Optionally, Pri($l$, $i$, $f,d$) is obtained by using a fifth relation, and the fifth relation is:

$$\mathrm{Pri}(l,i,f,d) = KvMd + Kvf + vi + l.$$

Optionally, Pri($l,i,f,d$) is obtained by using a sixth relation, and the sixth relation is:

$$\mathrm{Pri}(l,i,f,d) = KvD\pi(f) + Kvd + vi + l,$$

where $\pi(f)$ indicates that $f$ is remapped.

Optionally, Pri($l,i,f,d$) is obtained by using a seventh relation, and the seventh relation is:

$$\mathrm{Pri}(l,i,f,d) = KvFd + Kv\pi(f) + vi + l,$$

where $\pi(f)$ indicates that $f$ is remapped.

Optionally, a smaller value of $\min(n_{3,l}^{(f)}, N_3 - n_{3,l}^{(f)})$ indicates a smaller value of $\pi(f)$, where $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, M $\leq N_3$, and $N_3$ is a positive integer.

Optionally, a value of $F$ is $N_3$, and a value range of $\pi(f)$ is 0, 1, ..., $N_3$-1.

For features and beneficial effects of the communication apparatus 700 provided in this embodiment of this application, refer to corresponding content in the foregoing method embodiments for understanding. Details are not described herein again.

This application further provides another communication apparatus. FIG. 8 is a diagram of a structure of the communication apparatus according to an embodiment of this application. The communication apparatus 800 may be configured to perform the steps performed by the network device in the embodiment shown in FIG. 4. For details, refer to related descriptions in the foregoing method embodiment.

The communication apparatus 800 includes a transceiver module 801 and a processing module 802.

The transceiver module 801 is configured to receive first information, where the first information indicates a precoding matrix, and the first information includes a part or all of a plurality of coefficients $C_{l,i,f,d}$, where $l = 1, 2, ..., v$ is a transport layer sequence number, $i = 0, 1, ..., K - 1$ is a CSI-RS port sequence number or a spatial domain basis sequence number, $f = 0, 1, ..., M - 1$ is a frequency domain basis sequence number, $d = 0, 1, ..., Q - 1$ is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, where $v, K, M,$ and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and the coefficient $C_{l,i,f,d}$ corresponds to a priority indication $Pri(l,i,f,d)$, and the coefficients $C_{l,i,f,d}$ in the first information are arranged based on $Pri(l,i, f, d)$.

The processing module 802 is configured to perform precoding processing on to-be-transmitted data based on the first information.

Optionally, a smaller value of $Pri(l,i,f,d)$ indicates a higher priority of the coefficient $C_{l,i,f,d}$; or a larger value of $Pri(l, i,f,d)$ indicates a higher priority of the coefficient $C_{l,i,f,d}$.

Optionally, a higher priority of the coefficient $C_{l,i,f,d}$ indicates that the coefficient $C_{l,i,f,d}$ is ranked higher in a field corresponding to the first information. A lower priority of the coefficient $C_{l,i,f,d}$ indicates that the coefficient $C_{l,i,f,d}$ is preferentially omitted when a field length of the first information is insufficient.

Optionally, when a priority of a first coefficient $C_{l,i,f,d}$ is higher than a priority of a second coefficient $C_{l,i,f,d}$, the first coefficient $C_{l,i,f,d}$ is sorted before the second coefficient $C_{l,i,f,d}$ in an information field used to carry the first information.

Optionally, when a length of the information field is limited, the first information includes the first coefficient $C_{l,i,f,d}$ but does not include the second coefficient $C_{l,i,f,d}$.

Optionally, the plurality of coefficients $C_{l,i,f,d}$ may be distributed in a first group and a second group, where a priority of the coefficient $C_{l,i,f,d}$ in the first group is higher than a priority of the coefficient $C_{l,i,f,d}$ in the second group, and the first information includes the coefficient $C_{l,i,f,d}$ in the first group.

In this possible embodiment, the first group may include $A_1$ higher-priority coefficients $C_{l,i,f,d}$, and the second group may include $A_2$ lower-priority coefficients $C_{l,i,f,d}$. A sum of $A_1$ and $A_2$ may be equal to a total quantity of weighting coefficients, or may be less than the total quantity of weighting coefficients. When the terminal device has no sufficient grant resource to report all the weighting coefficients, the terminal device may preferentially omit the $A_2$ lower-priority coefficients $C_{l,i,f,d}$ in the second group, and preferentially report the $A_1$ higher-priority coefficients $C_{l,i,f,d}$. In this embodiment, a more important coefficient that needs to be reported is specified.

Optionally, the first information further includes a first bitmap (bitmap), a length of the first bitmap is usually $vKMQ$, and the first bitmap may include a plurality of bits $B_{l,i,f,d}$. The terminal device may indicate, by using a value of the bit $B_{l,i,f,d}$ in the first bitmap, the coefficient $C_{l,i,f,d}$ included in the first information. The first information may include a coefficient $C_{l,i,f,d}$ corresponding to a bit $B_{l,i,f,d}$ with a first value, and the coefficient $C_{l,i,f,d}$ corresponding to the bit $B_{l,i,f,d}$ with the first value is not a strongest coefficient.

In this possible embodiment, because all coefficients are obtained through normalization by using a strongest coefficient as a reference, in other words, the strongest coefficient is fixed at 1, the strongest coefficient can be learned of by the network device without being reported, and does not need to be reported. Therefore, the first information may not include a strongest coefficient corresponding to the bit $B_{l,i,f,d}$ with the first value. The value of the bit $B_{l,i,f,d}$ in the first bitmap may be the first value, or may be a second value. The first value may be 1, and the second value may be 0. Alternatively, the first value may be 0, and the second value may be 1. If $C_{l,i,f,d}$ indicated by the first value is not the strongest coefficient at the $l^{th}$ transport layer, $C_{l,i,f,d}$ is reported in the first information. $C_{l,i,f,d}$ indicated by the second value and the strongest coefficient at the $l^{th}$ transport layer that is indicated by the first value may be omitted and not reported. For example, when $C_{l,i,f,d}$ corresponding to a bit with a value of 1 in the first bitmap is not the strongest coefficient, $C_{l,i,f,d}$ is reported in the first information, and $C_{l,i,f,d}$ corresponding to a bit with a value of 2 in the first bitmap and the strongest coefficient corresponding to the bit with the value of 1 in the first bitmap may be omitted and not reported. In this embodiment, a more important coefficient that needs to be reported is specified.

Optionally, a smaller value of $Pri(l,i,f,d)$ indicates a higher priority of the bit $B_{l,i,f,d}$; or a larger value of $Pri(l,i, f, d)$ indicates a higher priority of the bit $B_{l,i,f,d}$.

Optionally, a higher priority of the bit $B_{l,i,f,d}$ indicates that a higher position corresponding to the bit $B_{l,i,f,d}$ in the first bitmap, and a lower priority of the bit $B_{l,i,f,d}$ indicates that a lower position corresponding to the bit $B_{l,i,f,d}$ in the first bitmap.

Optionally, the plurality of bits $B_{l,i,f,d}$ in the first bitmap may be distributed in a third group and a fourth group, where a priority of the bit $B_{l,i,f,d}$ in the third group is higher than a priority of the bit $B_{l,i,f,d}$ in the fourth group.

In this possible embodiment, the third group may be the first group, or may be another group independent of the first group, and the fourth group may be the second group, or may be another group independent of the second group. The third group may include $A_1$ highest-priority bits $B_{l,i,f,d}$, the fourth group may include $A_2$ lowest-priority bits $B_{l,i,f,d}$, the length of the first bitmap is *vKMQ,* and the third group may alternatively include *vKMQ*-$A_2$ highest-priority bits $B_{l,i,f,d}$. When all the bits $B_{l,i,f,d}$ cannot be reported due to the limitation of the length of the UCI, the terminal device may preferentially omit the $A_2$ lowest-priority coefficients $B_{l,i,f,d}$ in the fourth group, and preferentially report the *vKMQ*-$A_2$ highest-priority coefficients $C_{l,i,f,d}$ in the third group. In this implementation, a more important bit $B_{l,i,f,d}$ that needs to be reported is specified. In this manner, both the first information and the first bitmap may be grouped by using the priority indication Pri(*l, i, f, d),* to reduce reporting overheads as much as possible.

Optionally, the *K* CSI-RS ports are a part or all of CSI-RS ports selected by the terminal device from *P* CSI-RS ports, where *P* is a quantity of CSI-RS ports configured by the network device or predefined in a protocol, *K* ≤ *P,* and *K* and *P* are all positive integers.

Optionally, the *K* spatial domain bases are a part or all of spatial domain bases selected by the terminal device from *P* spatial domain bases, where *P* is a quantity of spatial domain bases configured by the network device or predefined in a protocol, *K* ≤ *P,* and *K* and *P* are all positive integers.

Optionally, the network device sends assistance information to the terminal device, so that the terminal device determines *K*.

Optionally, the M frequency domain bases are a part or all of frequency domain bases selected by the terminal device from $N_3$ frequency domain bases, where $N_3$ is determined based on a quantity of frequency-domain units configured by the network device or predefined in a protocol, $M \le N_3$, and *M* and $N_3$ are all positive integers. Optionally, the network device sends assistance information to the terminal device, so that the terminal device determines *M.*

Optionally, the *Q* Doppler domain bases are a part or all of Doppler domain bases selected by the terminal device from $N_4$ Doppler domain bases, where $N_4$ is determined based on a quantity of time-domain units configured by the network device or predefined in a protocol, $Q \le N_4$, and *Q* and $N_4$ are all positive integers. Optionally, the network device sends assistance information to the terminal device, so that the terminal device determines *Q.*

Optionally, a sequence number corresponding to the *M* frequency domain bases selected by the terminal device from the $N_3$ frequency domain bases is represented by $n_{3,l}^{(f)}$, where *l* = 1, 2, ... , *v* is the transport layer sequence number, and *f* = 0, 1, ... , *M* - 1; in other words, in the M frequency domain bases at the *l*th transport layer, the frequency domain basis with the sequence number *f* corresponds to the frequency domain basis with the sequence number $n_{3,l}^{(f)}$ in the $N_3$ frequency domain bases.

Optionally, a sequence number corresponding to the *Q* Doppler domain bases selected by the terminal device from the $N_4$ Doppler domain bases is represented by $n_{4,l}^{(d)}$, where *l* = 1, 2, ... , *v* is the transport layer sequence number, and *d* = 0,1, ..., *Q* - 1; in other words, in the *Q* Doppler domain bases at the *l*th transport layer, the Doppler domain basis with the sequence number *d* corresponds to the Doppler domain basis with the sequence number $n_{4,l}^{(d)}$ in the Doppler domain bases $N_4$.

Optionally, at least one of the frequency domain basis sequence number and the Doppler domain basis sequence number may be a remapped sequence number.

For example, the frequency domain basis sequence number $n_{3,l}^{(f)}$ is remapped by using
$$n_{3,l}^{(f)} = \left( n_{3,l}^{(f)} - n_{3,l}^{(f_l^*)} \right) \mod N_3$$
, so that a remapped frequency domain basis sequence number corresponding to the strongest coefficient is $n_{3,l}^{(f_l^*)} = 0$, where $n_{3,l}^{(f)}$ represents a sequence number of the $N_3$ frequency domain bases, and $n_{3,l}^{(f_l^*)}$ represents the remapped frequency domain basis sequence number corresponding to the strongest coefficient in the $N_3$ frequency domain bases.

For example, *f* is remapped by using $f = (f - f_l^*) \mod M$, so that a remapped frequency domain basis sequence number corresponding to the strongest coefficient is $f_l^* = 0$, where *f* represents a sequence number of the *M* frequency domain bases selected from the $N_3$ frequency domain bases, and $f_l^*$ represents the remapped frequency domain basis sequence number corresponding to the strongest coefficient in the *M* frequency domain bases.

For example, the Doppler domain basis sequence number $n_{4,l}^{(d)}$ is remapped by using
$$n_{4,l}^{(d)} = \left( n_{4,l}^{(d)} - n_{4,l}^{(d_l^*)} \right) \mod N_4$$
, and $n_{4,l}^{(d_l^*)} = 0$ after the remapping, where $n_{4,l}^{(d)}$ represents a sequence number of the $N_4$ Doppler domain bases, and $n_{4,l}^{(d_l^*)}$ represents a remapped Doppler domain basis sequence number corresponding to the strongest coefficient in the $N_4$ Doppler domain bases.

For example, $d$ is remapped by using $d = (d - d_l^*) \bmod Q$ , so that a remapped Doppler domain basis sequence number corresponding to the strongest coefficient is $d_l^* = 0$ , where $d$ represents a sequence number of the $Q$ frequency domain bases selected from the $N_4$ Doppler domain bases, and $d_l^*$ represents the remapped Doppler domain basis sequence number corresponding to the strongest coefficient in the Q Doppler domain bases.

It should be noted that, for $l$ = 1, ... , $v$, it is assumed that $i_l^* \in \{0, 1, \dots, \mathrm{K} - 1\}$, $f_l^* \in \{0, 1, \dots, M - 1\}$ and $d_l^* \in \{0, 1, \dots, Q - 1\}$ are respectively a CSI-RS port sequence number, a frequency domain basis sequence number, and a Doppler domain basis sequence number that correspond to the strongest coefficient at the $l^{th}$ transport layer, in other words, $C_{l, i_l^*, f_l^*, d_l^*}$ is the strongest coefficient at the $l^{th}$ transport layer.

Optionally, the terminal device indicates, to the network device, the CSI-RS port sequence number corresponding to the strongest coefficient at the $l^{th}$ transport layer.

Optionally, Pri($l$,$i$,$f$,$d$) is obtained by using a first relation, and the first relation is:

$$\mathrm{Pri}(l, i, f, d) = KvD\pi(f) + Kv\varphi(d) + vi + l,$$

where $\varphi(d)$ indicates that $d$ is remapped, $\pi(f)$ indicates that $f$ is remapped, $D$ is a positive integer, and $D > \varphi(d)$.

Optionally, Pri($l$,$i$,$f$,$d$) is obtained by using a second relation, and the second relation is:

$$\mathrm{Pri}(l, i, f, d) = KvF\varphi(d) + Kv\pi(f) + vi + l,$$

where $\pi(f)$ indicates that $f$ is remapped, $\varphi(d)$ indicates that $d$ is remapped, $F$ is a positive integer, and $F > \pi(f)$.

Optionally, Pri($l$,$i$,$f$,$d$) is obtained by using a third relation, and the third relation is:

$$\mathrm{Pri}(l, i, f, d) = Kv\phi(f, d) + vi + l,$$

where $\phi(f,d)$ indicates that both $f$ and d are remapped.

Optionally, a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi$ (f,d), where $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \leq N_4$, and $N_4$ is a positive integer; and $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, M $\leq N_3$, and $N_3$ is a positive integer.

Optionally, a value range of $\phi(f,d)$ is 0, 1, ..., $D*M$-1.

Optionally, Pri($l$,$i$,$f$,$d$) is obtained by using a fourth relation, and the fourth relation is:

$$\mathrm{Pri}(l, i, f, d) = KvM\varphi(d) + Kvf + vi + l,$$

where $\varphi(d)$ indicates that $d$ is remapped.

Optionally, a smaller value of $\min(n_{4,l}^{(d)}, N_4 - n_{4,l}^{(d)})$ indicates a smaller value of $\varphi(d)$, where $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \leq N_4$, and $N_4$ is a positive integer.

Optionally, a value of $D$ is $N_4$, and a value range of $\varphi(d)$ is 0, 1, ..., $N_4$ - 1.

Optionally, Pri($l$,$i$,$f$,$d$) is obtained by using a fifth relation, and the fifth relation is:

$$\mathrm{Pri}(l, i, f, d) = KvMd + Kvf + vi + l.$$

Optionally, Pri($l$,$i$,$f$,$d$) is obtained by using a sixth relation, and the sixth relation is:

$$\mathrm{Pri}(l, i, f, d) = KvD\pi(f) + Kvd + vi + l,$$

where $\pi(f)$ indicates that $f$ is remapped.

Optionally, Pri($l,i,f,d$) is obtained by using a seventh relation, and the seventh relation is:

$$\mathrm{Pri}(l, i, f, d) = KvFd + Kv\pi(f) + vi + l,$$

where $\pi(f)$ indicates that $f$ is remapped.

Optionally, a smaller value of $\min(n_{3,l}^{(f)}, N_3 - n_{3,l}^{(f)})$ indicates a smaller value of $\pi(f)$, where $n_{3,l}^{(f)}$ represents, for the $l^{th}$ layer, a sequence number corresponding to the $M$ selected frequency domain bases in $N_3$ frequency domain bases, $N_3$ is determined based on a quantity of frequency-domain units configured by the network device, $M \le N_3$, and $N_3$ is a positive integer.

Optionally, a value of $F$ is $N_3$, and a value range of $\pi(f)$ is 0, 1, ..., $N_3$-1.

For features and beneficial effects of the communication apparatus 800 provided in this embodiment of this application, refer to corresponding content in the foregoing method embodiments for understanding. Details are not described herein again.

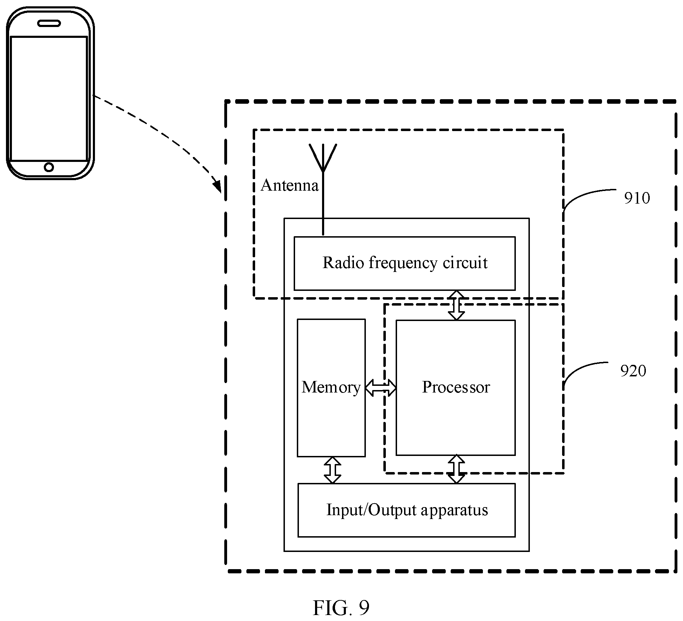

FIG. 9 is a simplified diagram of a structure of a terminal device. For ease of understanding and illustration, an example in which the terminal device is a mobile phone is used in FIG. 9. As shown in FIG. 9, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to send and receive a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 9, the terminal device includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit, in other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitting circuit, or the like.

It should be understood that the transceiver unit 910 is configured to perform a sending operation and a receiving operation of the terminal device in the foregoing method embodiments, and the processing unit 920 is configured to perform an operation other than the sending operation and the receiving operation of the terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

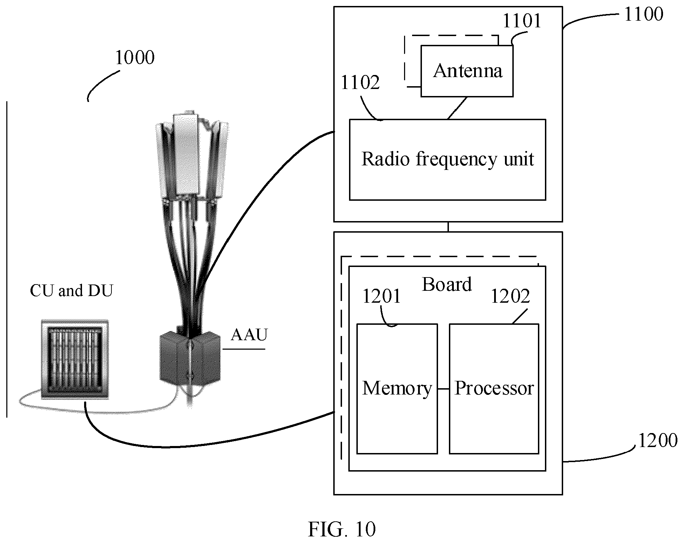

This application further provides a network device. FIG. 10 is a diagram of a structure of a network device 1000 according to an embodiment of this application. The network device 1000 may be used in the system shown in FIG. 1 or FIG. 2. For example, the network device 1000 may be the network device in the system shown in FIG. 1 or FIG. 2, and is configured to perform a function of the network device in the foregoing method embodiments. It should be understood that the following is merely an example. In a future communication system, the network device may have another form and composition.

For example, in a 5G communication system, the network device 1000 may include a CU, a DU, and an AAU. In comparison with a network device, in an LTE communication system, that includes one or more radio frequency units, for example, an RRU and one or more BBUs.

A non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 10, is consistent with that of a conventional 4G network device. The CU and the DU are deployed on same hardware. It should be understood that FIG. 10 is merely an example, and constitutes no limitation on the protection scope of this application. For example, a deployment form may alternatively be that DUs are deployed in a BBU equipment room, CUs or DUs are deployed together, or CUs are centralized at a higher level.

Alternatively, the AAU 1100 may implement a transceiver function, is referred to as a transceiver unit 1100, and corresponds to the transceiver module 801 in FIG. 8. Optionally, the transceiver unit 1100 may also be referred to as a transceiver, a transceiver circuit, a transceiver, or the like, and may include at least one antenna 1101 and a radio frequency unit 1102. Optionally, the transceiver unit 1100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The CU and the DU 1200 may implement an internal processing function, are referred to as a processing unit 1200, and correspond to the processing module 802 in FIG. 8. Optionally, the processing unit 1200 may control the network device or the like, and may be referred to as a controller. The AAU, the CU, and the DU may be physically disposed together, or may be physically disposed separately.

In addition, the network device is not limited to the form shown in FIG. 10, and may alternatively be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the processing unit 1200 may include one or more boards. A plurality of boards may jointly support a radio access network (for example, an LTE network) of a single access standard, or may separately support radio access networks (such as an LTE network, a 5G network, a future network, or another network) of different access standards. The CU and DU 1200 further include a memory 1201 and a processor 1202. The memory 1201 is configured to store necessary instructions and data. The processor 1202 is configured to control the network device to perform a necessary action, for example, is configured to control the network device to perform an operation procedure related to the network device in the foregoing method embodiments. The memory 1201 and the processor 1202 may serve one or more boards. In other words, a memory and a processor may be disposed on each board. Alternatively, a plurality of boards may share a same memory and a same processor. In addition, a necessary circuit may further be disposed on each board.

It should be understood that the network device 1000 shown in FIG. 10 can implement a function of the network device related in the method embodiments in FIG. 4. Operations and/or functions of the units in the network device 1000 are used to implement a corresponding procedure performed by the network device in the foregoing method embodiments of this application. To avoid repetition, detailed descriptions are appropriately omitted herein. The structure of the network device shown in FIG. 10 is merely a possible form, and should not constitute any limitation on embodiments of this application. In this application, a possibility that there may be a network device structure in another form in the future is not excluded.

The CU and DU 1200 may be configured to perform an action that is implemented inside the network device and that is described in the foregoing method embodiments. The AAU 1100 may be configured to perform a sending action by the network device to the terminal device or a receiving action by the network device from the terminal device in the foregoing method embodiments. For details, refer to the descriptions in the foregoing method embodiments. Details are not described herein again.

An embodiment of this application further provides a communication system. The communication system includes a terminal device and a network device. The terminal device is configured to perform all or some of the steps performed by the terminal device in the embodiment shown in FIG. 4. The network device is configured to perform all or some of the steps performed by the network device in the embodiment shown in FIG. 4.

An embodiment of this application further provides a computer program product including instructions. When the computer program product runs on a computer, the computer is enabled to perform the method in the embodiment shown in FIG. 4.

An embodiment of this application further provides a computer-readable storage medium, including computer instructions. When the computer instructions are run on a computer, the computer is enabled to perform the method in the embodiment shown in FIG. 4.

An embodiment of this application further provides a chip apparatus, including a processor, configured to: be connected to a memory and invoke a program stored in the memory, to enable the processor to perform the method in the embodiment shown in FIG. 4.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 4. The memory mentioned anywhere above may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected depending on actual requirements to achieve the objectives of the solutions in embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A channel information reporting method, comprising:

   determining, by a terminal device, first information, wherein the first information indicates a precoding matrix, and the first information comprises a part or all of a plurality of coefficients $C_{l,i,f,d}$, wherein $l = 1, 2, ..., v$ is a transport layer sequence number, $i = 0, 1, ..., K - 1$ is a channel state information reference signal CSI-RS port sequence number or a spatial domain basis sequence number, $f = 0, 1, ..., M - 1$ is a frequency domain basis sequence number, $d = 0, 1, ..., Q - 1$ is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, wherein $v, K, M,$ and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and the coefficient $C_{l,i,f,d}$ corresponds to a priority indication Pri($l, i, f, d$), and the coefficients $C_{l,i,f,d}$ in the first information are arranged based on Pri($l, i, f, d$); and

sending, by the terminal device, the first information to a network device.

2. A channel information reporting method, comprising:

receiving, by a network device, first information, wherein the first information indicates a precoding matrix, and the first information comprises a part or all of a plurality of coefficients $C_{l,i,f,d}$, wherein $l$ = 1, 2, ..., $v$ is a transport layer sequence number, $i$ = 0,1, ..., $K$ - 1 is a channel state information reference signal CSI-RS port sequence number or a spatial domain basis sequence number, $f$ = 0, 1, ..., $M$ - 1 is a frequency domain basis sequence number, $d$ = 0,1, ..., $Q$ - 1 is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, wherein $v, K, M,$ and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler domain basis that correspond to the precoding matrix; and the coefficient $C_{l,i,f,d}$ corresponds to a priority indication Pri($l, i, f, d$), and the coefficients $C_{l,i,f,d}$ in the first information are arranged based on Pri($l, i, f, d$); and

performing, by the network device, precoding processing on to-be-transmitted data based on the first information.

3. The channel information reporting method according to claim 1 or 2, wherein a smaller value of Pri($l, i, f, d$) indicates a higher priority of the coefficient $C_{l,i,f,d}$; or a larger value of Pri($l, i, f, d$) indicates a higher priority of the coefficient $C_{l,i,f,d}$.

4. The channel information reporting method according to claim 3, wherein
when a priority of a first coefficient $C_{l,i,f,d}$ is higher than a priority of a second coefficient $C_{l,i,f,d}$, the first coefficient $C_{l,i,f,d}$ is ranked before the second coefficient $C_{l,i,f,d}$ in an information field used to carry the first information.

5. The channel information reporting method according to claim 4, wherein when a length of the information field is limited, the first information comprises the first coefficient $C_{l,i,f,d}$ but does not comprise the second coefficient $C_{l,i,f,d}$.

6. The channel information reporting method according to any one of claims 1 to 5, wherein Pri($l, i, f, d$) is obtained by using a first relation, and the first relation is:

$$\mathrm{Pri}(l, i, f, d) = K v D \pi(f) + K v \varphi(d) + v i + l,$$

wherein $\varphi(d)$ indicates that $d$ is remapped, $\pi(f)$ indicates that $f$ is remapped, $D$ is a positive integer, and $D > \varphi(d)$.

7. The channel information reporting method according to any one of claims 1 to 5, wherein Pri($l, i, f, d$) is obtained by using a second relation, and the second relation is:

$$\mathrm{Pri}(l, i, f, d) = K v F \varphi(d) + K v \pi(f) + v i + l,$$

wherein $\pi(f)$ indicates that $f$ is remapped, $\varphi(d)$ indicates that $d$ is remapped, F is a positive integer, and $F > \pi(f)$.

8. The channel information reporting method according to any one of claims 1 to 5, wherein Pri($l, i, f, d$) is obtained by using a third relation, and the third relation is:

$$\mathrm{Pri}(l, i, f, d) = K v \phi(f, d) + v i + l,$$

wherein $\phi(f, d)$ indicates that both $f$ and $d$ are remapped.

9. The channel information reporting method according to claim 8, wherein a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi(f, d)$, wherein $n_{4,l}^{(d)}$ represents, for the $l^{th}$ layer, a sequence number corresponding to the $Q$ selected Doppler domain bases in $N_4$ Doppler domain

bases, $N_4$ is determined based on a quantity of time-domain units configured by the network device, $Q \leq N_4$, and $N_4$ is a positive integer; and $n_{3,l}^{(f)}$ represents, for the $l^{th}$ layer, a sequence number corresponding to the $M$ selected frequency domain bases in $N_3$ frequency domain bases, $N_3$ is determined based on a quantity of frequency-domain units configured by the network device, $M \leq N_3$, and $N_3$ is a positive integer.

10. The channel information reporting method according to claim 9, wherein a value range of $\phi(f, d)$ is 0, 1, ..., $D*M$-1.

11. The channel information reporting method according to any one of claims 1 to 5, wherein Pri($l, i, f, d$) is obtained by using a fourth relation, and the fourth relation is:

$$\mathrm{Pri}(l, i, f, d) = KvM\varphi(d) + Kvf + vi + l,$$

wherein $\varphi(d)$ indicates that $d$ is remapped.

12. The channel information reporting method according to claim 6, 7, or 11, wherein a smaller value of $\min(n_{4,l}^{(d)}, N_4 - n_{4,l}^{(d)})$ indicates a smaller value of $\varphi(d)$, wherein $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \leq N_4$, and $N_4$ is a positive integer.

13. The channel information reporting method according to claim 12, wherein a value of $D$ is $N_4$, and a value range of $\varphi(d)$ is 0, 1, ..., $N_4$ -1.

14. The channel information reporting method according to claim 7, 12, or 13, wherein a smaller value of $\min(n_{3,l}^{(f)}, N_3 - n_{3,l}^{(f)})$ indicates a smaller value of $\pi(f)$, wherein $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, $M \leq N_3$, and $N_3$ is a positive integer.

15. The channel information reporting method according to claim 14, wherein a value of $F$ is $N_3$, and a value range of $\pi(f)$ is 0, 1, ..., $N_3$-1.

16. The channel information reporting method according to any one of claims 1 to 5, wherein Pri($l, i, f, d$) is obtained by using a fifth relation, and the fifth relation is:

$$\mathrm{Pri}(l, i, f, d) = Kv \cdot Md + Kvf + vi + l.$$

17. A communication apparatus, comprising a transceiver module and a processing module, wherein

the processing module is configured to determine first information, wherein the first information indicates a precoding matrix, and the first information comprises a part or all of a plurality of coefficients $C_{l,i,f,d}$, wherein $l$ = 1, 2, ..., $v$ is a transport layer sequence number, $i$ = 0,1, ... , $K$ - 1 is a channel state information reference signal CSI-RS port sequence number or a spatial domain basis sequence number, $f$ = 0,1, ..., $M$ - 1 is a frequency domain basis sequence number, $d$ = 0,1, ..., Q - 1 is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, wherein $v$, $K$, $M$, and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler basis that correspond to the precoding matrix; and the coefficient $C_{l,i,f,d}$ corresponds to a priority indication Pri($l, i, f, d$), and the coefficients $C_{l,i,f,d}$ in the first information are arranged based on Pri($l, i, f, d$); and
the transceiver module is configured to send the first information to a network device.

18. A communication apparatus, comprising a transceiver module and a processing module, wherein

the transceiver module is configured to receive first information, wherein the first information indicates a precoding matrix, and the first information comprises a part or all of a plurality of coefficients $C_{l,i,f,d}$, wherein $l$

= 1, 2, ..., $v$ is a transport layer sequence number, $i = 0, 1, ... , K$ - 1 is a channel state information reference signal CSI-RS port sequence number or a spatial domain basis sequence number, $f = 0, 1, ... , M$ - 1 is a frequency domain basis sequence number, $d = 0, 1, ..., Q$ - 1 is a Doppler domain basis sequence number, $v$ represents a quantity of transport layers, $K$ represents a quantity of CSI-RS ports or a quantity of spatial domain bases, $M$ represents a quantity of frequency domain bases, and $Q$ represents a quantity of Doppler domain bases, wherein $v, K, M,$ and $Q$ are all positive integers; the coefficient $C_{l,i,f,d}$ indicates a weighting coefficient of an $l^{th}$ transport layer, an $i^{th}$ CSI-RS port or spatial domain basis, an $f^{th}$ frequency domain basis, and a $d^{th}$ Doppler basis that correspond to the precoding matrix; and the coefficient $C_{l,i,f,d}$ corresponds to a priority indication Pri($l, i, f, d$), and the coefficients $C_{l,i,f,d}$ in the first information are arranged based on Pri($l, i, f, d$); and

the processing module is configured to perform precoding processing on to-be-transmitted data based on the first information.

19. The communication apparatus according to claim 17 or 18, wherein a smaller value of Pri($l, i, f, d$) indicates a higher priority of the coefficient $C_{l,i,f,d}$; or a larger value of Pri($l, i, f, d$) indicates a higher priority of the coefficient $C_{l,i,f,d}$.

20. The communication apparatus according to claim 19, wherein when a priority of a first coefficient $C_{l,i,f,d}$ is higher than a priority of a second coefficient $C_{l,i,f,d}$, the first coefficient $C_{l,i,f,d}$ is sorted before the second coefficient $C_{l,i,f,d}$ in an information field used to carry the first information.

21. The communication apparatus according to claim 20, wherein when a length of the information field is limited, the first information comprises the first coefficient $C_{l,i,f,d}$ but does not comprise the second coefficient $C_{l,i,f,d}$.

22. The communication apparatus according to any one of claims 17 to 21, wherein Pri($l, i, f, d$) is obtained by using a first relation, and the first relation is:

$$\text{Pri}(l, i, f, d) = KvD\pi(f) + Kv\varphi(d) + vi + l,$$

wherein $\varphi(d)$ indicates that $d$ is remapped, $\pi(f)$ indicates that $f$ is remapped, $D$ is a positive integer, and $D > \varphi(d)$.

23. The communication apparatus according to any one of claims 17 to 21, wherein Pri($l, i, f, d$) is obtained by using a second relation, and the second relation is:

$$\text{Pri}(l, i, f, d) = KvF\varphi(d) + Kv\pi(f) + vi + l,$$

wherein $\pi(f)$ indicates that $f$ is remapped, $\varphi(d)$ indicates that $d$ is remapped, $F$ is a positive integer, and $F > \pi(f)$.

24. The communication apparatus according to any one of claims 17 to 21, wherein Pri($l, i, f, d$) is obtained by using a third relation, and the third relation is:

$$\text{Pri}(l, i, f, d) = Kv\phi(f, d) + vi + l,$$

wherein $\phi(f, d)$ indicates that both $f$ and $d$ are remapped.

25. The communication apparatus according to claim 24, wherein a smaller value of $(\min(n_{3,l}^{(f)}, N_3 - n_{3,l}^{(f)}) + \min(n_{4,l}^{(d)}, N_4 - n_{4,l}^{(d)}))$ indicates a smaller value of $\phi(f, d)$, wherein $n_{4,l}^{(d)}$ represents, for the $l^{th}$ layer, a sequence number corresponding to the $Q$ selected Doppler domain bases in $N_4$ Doppler domain bases, $N_4$ is determined based on a quantity of time-domain units configured by the network device, $Q \le N_4$, and $N_4$ is a positive integer; and $n_{3,l}^{(f)}$ represents, for the $l^{th}$ layer, a sequence number corresponding to the M selected frequency domain bases in $N_3$ frequency domain bases, $N_3$ is determined based on a quantity of frequency-domain units configured by the network device, $M \le N_3$, and $N_3$ is a positive integer.

26. The communication apparatus according to claim 25, wherein a value range of $\phi(f, d)$ is 0, 1, ..., $D*M$-1.

27. The communication apparatus according to any one of claims 17 to 21, wherein Pri($l, i, f, d$) is obtained by using a fourth relation, and the fourth relation is:

$$\mathrm{Pri}(l,i,f,d) = KvM\varphi(d) + Kvf + vi + l,$$

wherein $\varphi(d)$ indicates that $d$ is remapped.

28. The communication apparatus according to claim 22, 23, or 27, wherein a smaller value of $\min(n_{4,l}^{(d)}, N_4 - n_{4,l}^{(d)})$ indicates a smaller value of $\varphi(d)$, wherein $n_{4,l}^{(d)}$ represents, for the $l^{\text{th}}$ layer, a sequence number corresponding to the Q selected Doppler domain bases in $N_4$ Doppler domain bases, $N_4$ is determined based on a quantity of time-domain units configured by the network device, $Q \leq N_4$, and $N_4$ is a positive integer.

29. The communication apparatus according to claim 28, wherein a value of $D$ is $N_4$, and a value range of $\varphi(d)$ is 0, 1, ..., $N_4$ -1.

30. The communication apparatus according to claim 23, 28, or 29, wherein a smaller value of $\min(n_{3,l}^{(f)}, N_3 - n_{3,l}^{(f)})$ indicates a smaller value of $\pi(f)$, wherein $n_{3,l}^{(f)}$ represents, for the $l^{\text{th}}$ layer, a sequence number corresponding to the $M$ selected frequency domain bases in $N_3$ frequency domain bases, $N_3$ is determined based on a quantity of frequency-domain units configured by the network device, $M \leq N_3$, and $N_3$ is a positive integer.

31. The communication apparatus according to claim 30, wherein a value of $F$ is $N_3$, and a value range of $\pi(f)$ is 0, 1, ..., $N_3$-1.

32. The communication apparatus according to any one of claims 17 to 21, wherein Pri(*l, i, f, d*) is obtained by using a fifth relation, and the fifth relation is:

$$\mathrm{Pri}(l,i,f,d) = Kv \cdot Md + Kvf + vi + l.$$

33. A communication apparatus, comprising at least one processor, coupled to a memory, wherein

    the memory is configured to store a program or instructions; and
    the at least one processor is configured to execute the program or the instructions, to enable the apparatus to implement the method according to any one of claims 1 to 16.

34. A computer program product comprising program instructions, wherein when the program instructions are run on a computer, the computer is enabled to perform the method according to any one of claims 1 to 16.

35. A computer-readable storage medium, wherein the computer-readable storage medium stores program instructions; and when the program instructions are run, the method according to any one of claims 1 to 16 is performed.

36. A chip apparatus, comprising a processor, wherein the processor is connected to a memory, and invokes a program stored in the memory, to enable the processor to perform the method according to any one of claims 1 to 16.

FIG. 1

FIG. 2

FIG. 3

FIG. 4

Doppler domain basis
structure before selection

Doppler domain basis
structure after the selection

Selection

$n_{4,l}^{(d)}$    0   2   3   4

$d$    0   1   2   3

FIG. 5

Delay sampling point

$n_{3,l}^{(f)}$

$D\pi(f) + \varphi(d)$

| | | | | |
|---|---|---|---|---|
| 19 | 17 | 15 | 16 | 18 |
| 9 | 7 | 5 | 6 | 8 |
| 4 | 2 | 0 | 1 | 3 |
| 14 | 12 | 10 | 11 | 13 |
| 24 | 22 | 20 | 21 | 23 |

2

1

0

4

3

3    4    0    1    2

$n_{4,l}^{(d)}$

Doppler frequency
sampling point

FIG. 6A

Delay sampling point

$n_{3,l}^{(f)}$

$F\varphi(d) + \pi(f)$

| | 3 | 4 | 0 | 1 | 2 |
|---|---|---|---|---|---|
| 2 | 23 | 13 | 3 | 8 | 18 |
| 1 | 21 | 11 | 1 | 6 | 16 |
| 0 | 20 | 10 | 0 | 5 | 15 |
| 4 | 22 | 12 | 2 | 7 | 17 |
| 3 | 24 | 14 | 4 | 9 | 19 |

$n_{4,l}^{(d)}$

Doppler frequency
sampling point

FIG. 6B

Delay sampling point

$n_{3,l}^{(f)}$

$\phi(f,d)$

| | 3 | 4 | 0 | 1 | 2 |
|---|---|---|---|---|---|
| 2 | 30 | 16 | 6 | 14 | 26 |
| 1 | 17 | 7 | 1 | 5 | 13 |
| 0 | 8 | 2 | 0 | 4 | 12 |
| 3 | 19 | 9 | 3 | 11 | 23 |
| 4 | 34 | 20 | 10 | 22 | 38 |

$n_{4,l}^{(d)}$

Doppler frequency
sampling point

FIG. 6C

700

Communication apparatus

701

Transceiver module

702

Processing module

FIG. 7

800

Communication apparatus

801

Transceiver module

802

Processing module

FIG. 8

Antenna

Radio frequency circuit

910

Memory ⟷ Processor

920

Input/Output apparatus

FIG. 9

FIG. 10

## INTERNATIONAL SEARCH REPORT

| International application No. |
|---|
| **PCT/CN2023/141939** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC: H04B 7/-; H04W 24/-

Documentation searched other than minimum documentation to the extent that such documents are included in the fields searched

Electronic data base consulted during the international search (name of data base and, where practicable, search terms used)

CNABS; CNTXT; ENTXTC; CNKI: UE, 终端, 用户设备, 网络设备, 网络节点, 网络侧设备, 基站, gNB, eNB, eNodeB, 发送, 指示, 请求, 信息, 优先级, 预编码矩阵指示, 时域, 频域, 多普勒域, CSI-RS, 端口, 空域, 传输层, 系数 VEN; USTXT; WOTXT; EPTXT; 3GPP; IEEE: user terminal, UE, network device, base station, gNB, eNB, eNodeB, transmit+, indicat+, request, information, priority, PMI, time domain, frequency domain, doppler domain, CSI-RS, port, spatial domain, layer, coefficient+

**C. DOCUMENTS CONSIDERED TO BE RELEVANT**

| Category* | Citation of document, with indication, where appropriate, of the relevant passages | Relevant to claim No. |
|---|---|---|
| X | CN 114270923 A (LG ELECTRONICS INC.) 01 April 2022 (2022-04-01) description, paragraphs 0370-0373 and 0425-0430 | 1-5, 17-21, 33-36 |
| X | CN 112312464 A (HUAWEI TECHNOLOGIES CO., LTD.) 02 February 2021 (2021-02-02) description, paragraphs 0356-0374 | 1-5, 17-21, 33-36 |
| A | CN 114586312 A (BEIJING XIAOMI MOBILE SOFTWARE CO., LTD.) 03 June 2022 (2022-06-03) entire document | 1-36 |
| A | CN 115315906 A (HUAWEI TECHNOLOGIES CO., LTD.) 08 November 2022 (2022-11-08) entire document | 1-36 |
| A | WO 2020221117 A1 (HUAWEI TECHNOLOGIES CO., LTD.) 05 November 2020 (2020-11-05) entire document | 1-36 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **25 January 2024** | **04 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/141939** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021062875 A1 (QUALCOMM INC. et al.) 08 April 2021 (2021-04-08)<br>    entire document | 1-36 |
| A | WO 2022194822 A1 (FRAUNHOFER GESELLSCHAFT ZUR FORSCHUNG DER ANGEWANDTEN FORSCHUNGE. V.) 22 September 2022 (2022-09-22)<br>    entire document | 1-36 |

Form PCT/ISA/210 (second sheet) (July 2022)

**INTERNATIONAL SEARCH REPORT**
Information on patent family members

International application No.

**PCT/CN2023/141939**

| Patent document cited in search report | | | Publication date (day/month/year) | Patent family member(s) | | | Publication date (day/month/year) |
|---|---|---|---|---|---|---|---|
| CN | 114270923 | A | 01 April 2022 | US | 2022303999 | A1 | 22 September 2022 |
| | | | | WO | 2021029695 | A1 | 18 February 2021 |
| | | | | JP | 2022544612 | A | 19 October 2022 |
| | | | | JP | 7377342 | B2 | 09 November 2023 |
| | | | | KR | 20220047800 | A | 19 April 2022 |
| | | | | EP | 4016866 | A1 | 22 June 2022 |
| | | | | EP | 4016866 | A4 | 30 August 2023 |
| CN | 112312464 | A | 02 February 2021 | CN | 112312464 | B | 29 December 2023 |
| CN | 114586312 | A | 03 June 2022 | WO | 2023133701 | A1 | 20 July 2023 |
| CN | 115315906 | A | 08 November 2022 | WO | 2021203373 | A1 | 14 October 2021 |
| | | | | CN | 115315906 | B | 22 August 2023 |
| WO | 2020221117 | A1 | 05 November 2020 | CN | 111865372 | A | 30 October 2020 |
| | | | | CN | 111865372 | B | 08 June 2021 |
| | | | | CN | 113452419 | A | 28 September 2021 |
| WO | 2021062875 | A1 | 08 April 2021 | None | | | |
| WO | 2022194822 | A1 | 22 September 2022 | KR | 20230159494 | A | 21 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211712731X